# EUROPEAN PATENT SPECIFICATION

(11) **EP 1 061 710 B1**
(45) Date of publication and mention of the grant of the patent: **08.12.2010**
(21) Application number: 00305089.5
(22) Date of filing: 16.06.2000
(51) Int. Cl.: H04L 29/06, G06F 17/30, G06F 9/46, G06F 9/44

(54) **System and method for integrated load distribution and resource management on internet environment**
System und Verfahren zur integrierter Lastverteilung und Betriebsmittelverwaltung in einer Internet-Umgebung
Système et méthode de répartition de charge intégrée et de gestion de ressources dans un environnement Internet

(30) Priority: 17.06.1999 US 335273; 17.06.1999 US 335272
(43) Date of publication of application: 20.12.2000
(73) Proprietor: Level 3 Communications, LLC, Broomfield CO 80021 (US)
(72) Inventor: Limelsky, Leon L., c/o IBM United Kingdom Ltd, Winchester, Hampshire SO21 2JN (GB); Manohar, Nelson R., c/o IBM United Kingdom Ltd, Winchester, Hampshire SO21 2JN (GB)
(74) Representative: Altenburg, Udo

(56) References cited:
- EP-A- 0 715 257
- EP-A- 0 828 214
- WO-A-97/22201
- WO-A-98/26553
- WO-A-98/26559
- WO-A-98/57275
- US-A- 5 459 837
- US-A- 5 881 238

## Description

### BACKGROUND OF THE INVENTION

### Field of the Invention

The present invention relates generally to techniques for monitoring, controlling, and distributing demand for resources in a widely distributed computer-networked environment, and, specifically, to a novel system and method for distributing load on web and multimedia servers and for managing and distributing resources across multiple web and multimedia servers.

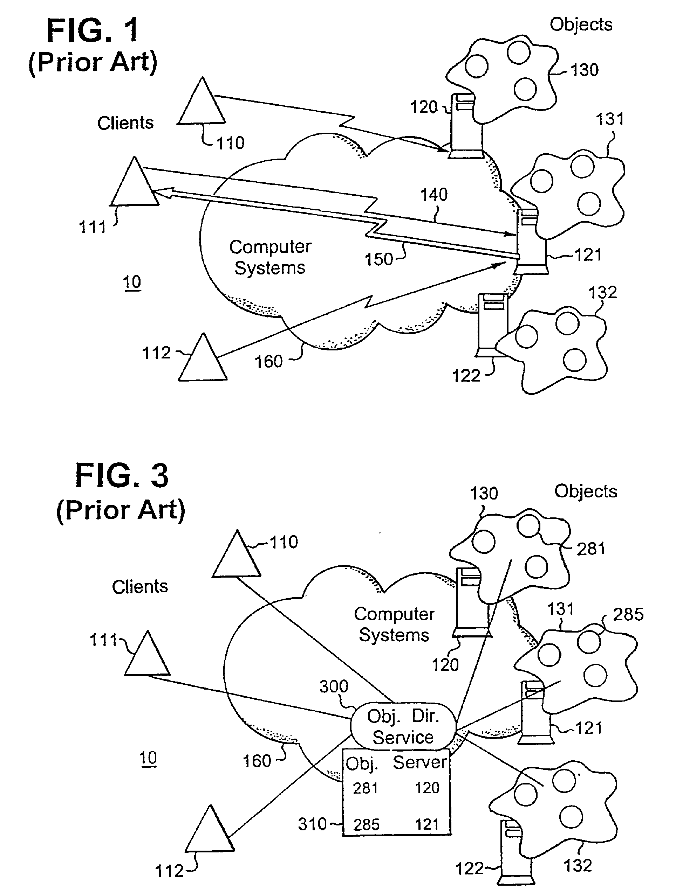

Figure 1 illustrates a typical distributed computer system (10) consisting of a plurality of clients (110, 111, 112), a plurality of servers (120, 121, 122), and several independent collections of objects (130, 131, 132). These components are connected by a computer networked environment (160) that enables a client (e.g., 111) to directly place a request message (140) for one or more objects from a server. The system allows such server (e.g., 121) to establish a streaming connection (150) for delivering an object to the requesting client (e.g., 111). This environment is typical of the Internet where a browser represents the client, a web server represents the server, a web site represents the collection of objects, the Internet represents the computer-networked environment. As known, the HTTP protocol provides the ability for a client to request an object from a given server via a location bound identifier referred to as a Universal Resource Locator (URL). The Transmission Control Protocol (TCP) provides the ability to stream an object (such as a web page or a video file) from the web server to the client.

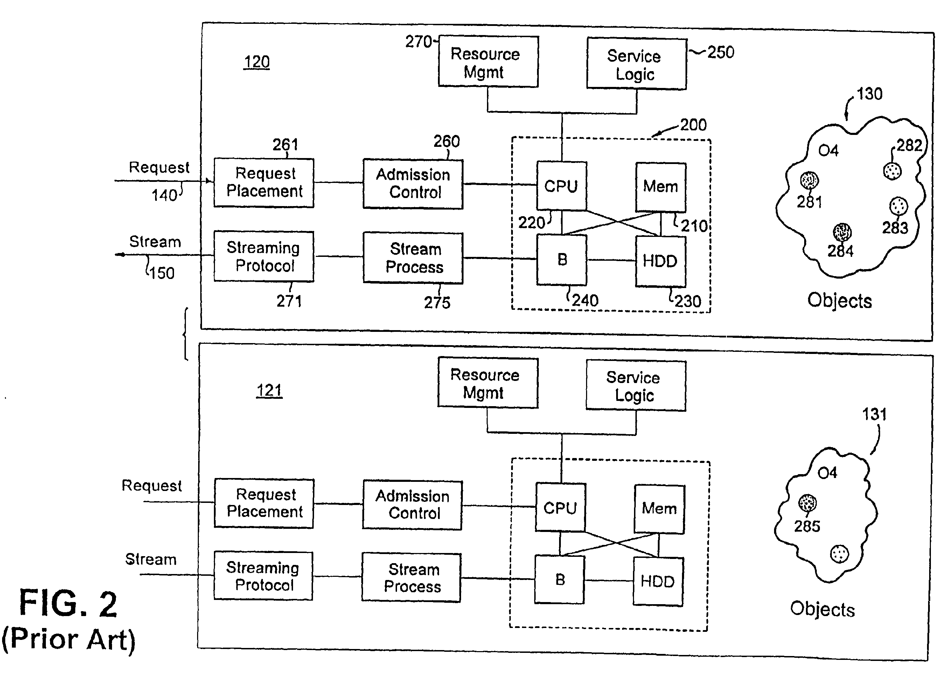

Figure 2 depicts in further detail the components of a server (e.g., 120) as found in the environment depicted in Figure 1. The server contains a finite amount of local resources (200) comprised of memory (210), CPU (220), disk storage (230), and, network bandwidth (240). The server is associated with a collection of objects (130). In this particular case, the collection is composed of four objects (281, 282, 283, 284). Interactivity with a client such as VCR interactivity during playback (e.g., pause, rewind, stop, fast forward, etc.,), billing, security, etc. are handled by the server's service logic component (250). A signaling protocol (261) (e.g., HTTP) allows the server to receive requests (e.g., 140) from clients. For a client (e.g., 111) to access an object (e.g., 281) on the server's collections, the server allocates a portion of its resources (200) to the corresponding streaming connection (150). Because resources are finite, a local admission control process (260) is used to determine whether an incoming request can be served. A local resource management process (270) is used to reserve, access, monitor, and de-allocate local resources (200) in the server (for example, disk storage (HDD), bandwidth (B), CPU cycles (CPU), memory (MeM), etc. such as depicted in Figure 2). The network streaming process (275) relies on a streaming protocol (271) to deliver content to its clients by establishing and managing streaming connections (e.g., 150) to clients. Management of resources at any particular server (e.g., 120) is completely independent from management of resources at any other particular server (e.g., 121). Furthermore, collections (e.g., 130 and 131) at different servers are independent from each other. In particular, though copies (281, 285) of the same object, e.g., object "O4" may exist on two different collections (130, 131) at different servers (120, 121) there exists no means of relating these copies (281, 285) to each other.

As depicted in Figure 3, the distributed computer system 10 (of Figure 1) may employ an object directory service 300 embodied as an object request broker (ORB) which provides the directory service over a collection of object sites (e.g., 130, 131, 132), and, extends location transparency to clients (e.g., 110, 111, 112) requesting objects (e.g., a media content file 04) from the distributed object collection (130, 131, 132). An object directory service (300) provides information necessary to locate any object throughout the computer-networked environment (160). The directory (310) employed particularly tracks the server associated with an object. For example, the first directory entry illustrates that object 281 is found on server 120 whereas the second directory entry illustrates that object 285 is found on server 121.

The task of leveraging the increased availability of widely distributed content and resources becomes very important with the proliferation of the next generation of the Internet, e.g., Internet2. The emerging Internet projects address the creation of a leading edge network for a new generation of applications that fully exploit the capabilities of broadband networks. Very high bandwidth and bandwidth reservation will allow materials such as continuous digital video and audio to move from research use to much broader use and include images, audio, and video in a way currently not possible. In such a widely distributed environment, accountable, efficient, and self-regulated management of resources will be desirable and most importantly, necessary.

The driving force behind the movement of Internet to the next generation is the commercialization of rich multimedia content. Digital library collections produced by corporations, entertainment material created by movie studios, and interactive instructional presentations developed by universities are soon to be available over the Internet, thus creating a new and broad source of revenue.

The emerging Internet relies on the bandwidth, which is on the order of several magnitudes larger than current Internet provides. It also alleviates network resource management and QoS control by introducing correspondent reservation and monitoring mechanisms. However, it is clear, that to date, mechanisms for the collective management of multiple media connections that efficiently leverage the sharing of resources across multiple servers in a wide area network are not found.

There is envisioned three major conditions for successful commercialization of those newly arising applications: first, mechanisms need be provided to allow paying users to establish a contract with service providers to reserve required infrastructure components and resources at a mutually agreed price for which providers establish and support a guaranteed quality of service; second, the resources supply would have to be sufficient to meet random changes of the demand, which may be completely unpredictable during architectural studies; and, third, service providers should safely rely on the system for effective security, rights and royalties management, accounting and billing for the consumption of dynamically re-configurable distributed virtual resources.

The current focus of resource management in the today's Internet, if any, relates to the setup and management of individual and independent media connections to server resources. However, the danger of this approach becomes clear when the presentations reuse multiple primary sources of content. To enforce the necessary quality as well as to control the usage and distribution when reusing multiple sources of content, two approaches are possible. One approach is to copy all content onto a single server (or a cluster of servers) during authoring, and replicating, as necessary, the final result to as many servers according to predicted demand. Primary content providers would then establish copyright charges, based on a-priori market analysis. On the positive side, the control of distribution, security, and billing functions become much easier, than in case of distributed content. On the negative, if the demand is estimated incorrectly, the profit is not maximized for either primary or secondary (i.e., reuse) content providers. Finally, the most dangerous problem is that this approach leads to over-engineering of resources while it does not prevent dropout of excessive requests. Such an approach is typical for today's Internet, because current multimedia content is generally not memory hungry, as compared with emerging multimedia applications.

Another approach would be to reassemble content on a need basis, for both authoring and dissemination. It would allow content to be stored once, but used as many times as necessary, establish charges proportionally to content and resources usage, and alleviate storage demand. However, it requires a system to dynamically manage multiple and frequently heterogeneous resources. In addition, this approach exacerbates security, and resource engineering. A demand for the particular segment can not be predicted at all, because this segment may be used in completely different, even orthogonal applications. Now, if the demand for a single segment can not be met, multiple applications are affected. The latter approach, however, is the only sensible way to be used by future Internet, because from the resource point of view, it is the most economical, and serving a maximum number of users.

Thus, it would be highly desirable to provide a system and method that allows all three major commercialization conditions to be satisfied.

There are a number of publications and patents in the area of QoS-driven resource management. Most of the work has been focused on either the network, as described in U.S. Patent 5,388,097 issued February 7, 1995 to Baugher, M.J. et al.,and entitled "System and Method for Bandwidth Reservation for Multimedia Traffic in Communication Networks," and U.S. Patent 5,581,703 issued December 3, 1996 to Baugher, M.J. et al, and entitled "Method and Apparatus for Reserving System Resources to assure Quality of Service"; or, the operating system, such as described in the reference "An Architecture Towards Efficient OS Support for Distributed Multimedia", Proceedings of IS&T/SPIE Multimedia Computing and Networking Conference '96, San Jose, CA, January 1996 by David K.Y. Yau and Simon S. Lam. With the proliferation of multimedia services on Internet, it was soon realized that while IP networks were able to provide a simple, best-effort delivery service, the IP protocol is not suited for use with new real-time applications, such as multimedia streaming, Virtual Reality applications, distributed supercomputing. As a result, new network protocols, such as Resource Reservation Setup Protocol (RSVP) (See, e.g., "The Grid: Blueprint for a New Computing Infrastructure," Edited by Ian Foster and Carl Kesselman, Chapter 19, pp. 379-503, Morgan Kauffman Publishers, 1999); Real Time Transport Protocol (RTP); Real Time Transport Control Protocol (RTCP) and others, were developed (See, e.g., William Stallings, "High-Speed Networks: TCP/IP and ATM Design Principles", Prentice Hall, 1997; and, I. Busse, B. Deffner, and H.Schulzrinne, "Dynamic QoS Control of Multimedia Applications based on RTP", Computer Communications, January 1996), enabling applications to request and negotiate network QoS parameters, such as bandwidth and latency. Deployment of those protocols on the current Internet has not been successful, firstly because it required upgrading all the non-RSVP routers and servers system software. Secondly, even if RSVP were deployed on the current Internet, very limited bandwidth and computing resources would still have been the bottleneck for successful deployment of real-time applications. The current Internet was built on the backbone, enabling cross-country communications on relatively unclogged T3 (45 megabit per second). Proliferation of graphic pages, and streaming audio and video applications depleted those resources quite fast. Even worse, the rate of user's population growth is considerably higher than newly build network resources.

The National Science Foundation and MCI Corporation, responding to the emerging needs of Internet community has been building a new network, called vBNS (very-high-performance Backbone Network Service). This nationwide network also provides a backbone for the two foundations, university-led effort called Internet 2 and by federal research agencies, called New Generation Internet. The vBNS allows most of the connected institutions to run at 622 million bits per second (OC12). By the year 2000, vBNS is expected to operate at 2.4 gigabits per second (2,400 megabits per second) by the year 2000.

The vBNS system exploits RSVP protocol to support two distinct classes of services: a Reserved Bandwidth Service, i.e. a service with bandwidth commitment, and a traditional best-effort IP service (See, e.g., Chuck Song, Laura Cunningham and Rick Wilder, "Quality of Service Development in the vBNS", MCI Communications Corporation, provided at the URL http://www.vbns.net/presentations/papers/QoSDev/ieeeqos.htm. Still, resource management at the network layer for vBNS is done separately from operating system layer and in isolation from application needs and availability of the end-resources, such as storage and computing resources.

A new breed of high performance applications such as remote surgery, robotics, tele-instrumentation, automated crisis response, digital libraries of satellite data, distance learning via multimedia supported Web sites, enhanced audio, and video, is emerging. However, to accommodate such high performance applications and their continuous media flows, it is not enough to increase or reserve network capacity. These new applications require end-to-end resource reservation and admission control, followed by co-ordination of distributed functions such as: (a) resource scheduling (e.g., CPU, disk, etc.) at the end-system(s), (b) packet scheduling and flow control in the network, and (c) monitoring of the delivered end-to-end quality of service. It is essential that quality of service is configurable, predictable and maintainable system-wide, including the end-system devices, communications subsystem, and networks. Furthermore, all end-to-end elements of distributed systems architecture must work in unison to achieve the desired application level behavior.

Up do date, there has been considerable effort in the development of end-to-end quality of service support. Among them are Heidelberg QoS Model, developed within HeiProject at IBM's European Networking Center and described in the reference entitled "HeiRAT - Quality of Service Management for Distributed Multimedia Systems", Multimedia Systems Journal, 1996 by Volg, C., Wolf, L., Herrtwich, R. And H. Wittig; an Extended Integrated Reference Model (XRM), developed by COMET group at Columbia University such as described in the reference entitled "Building Open Programmable Multimedia Networks", Computer Communications Journal, Vol. 21, No. 8, pp. 758-770, June 1998 by Campbell, A.T., Lazar, A.A., Schulzinne, H. And R. Stadler; OMEGA end-point architecture, developed as the interdisciplinary research effort in the University of Pennsylvania such as described in the reference entitled "Design, Implementation and Experiences of the OMEGA End-Point Architecture", Technical Report (MS-CIS-95-22), University of Pennsylvania, May 1995 by Nahrstedt K. And J. Smith; in-serv Architecture which is a contribution of the Internet Engineering Task Force (IETF) such as described in the reference entitled "A Framework for End-to-End QoS Combining RSVP/Intserv and Differentiated Services," Internet Draft, IETF, March 1998 by Bernet Y, et al.; the Quality of Service Architecture QoS-A, developed by A. Campbell, and presenting an integrated framework dealing with end-to-end QoS requirements such as described in the reference entitled "A Quality of Service Architecture", PhD thesis, Lancaster University, January 1996 by Andrew T Campbell. Another reference which analyzes the above mentioned QoS paper is entitled "A Survey of QoS Architectures", ACM/Springer Verlag, Multimedia Systems Journal, Special Issue on QoS Architecture, Vol. 6, No. 3, pp. 138-151, May 1998 by Aurrecoechea, C., Campbell, A.T. and L. Hauw.

Substantial work has been done by SRI International, developing an End-to-End Resource Management of Distributed Systems (ERDoS), which enables adaptive, end-to-end, scalable resource management of distributed systems such as described in the reference ERDOS QoS Architecture, Technical Report, SRI International, May 1998. An extensible Resource Specification Language (RSL) and the resource management architecture has been implemented within Globus meta-computing toolkit, and used to implement a variety of different resource management strategies such as described in Czajkowski, K., et al., "A Resource Management Architecture for Metacomputing Systems" Proc. IPPS/SPDP '98 Workshop on Job Scheduling Strategies for Parallel Processing, 1998; and Foster, I., Kesselman, C., "The Globus Product: A Status Report" Proc. IPPS/SPDP '98 Heterogeneous Computing Workshop, pp. 4-18, 1998.

While the architectures described in the above-mentioned references are directed resource reservation and management of end-to-end resources, they generally assume a single, even geographically limited network subsystem which provides bounds on delay, errors and meet bandwidth demands, and an operating system which is capable of providing run time QoS guarantees. However, the next generation Internet must be viewed not as only a network of networks, but first and foremost a system of distributed systems. In this paradigm, not only the communication resources, but also the computing and storage servers are shared among many users.

Thus, the architectures mentioned above do not provide a coordinated management of overall system resources as a function of request activities for individual content and computing resources. It deals with resources pre-assigned to particular services. Consequently, quality of service must be degraded in response to growing volume of requests for such services over and above an established limit. As the above-mentioned architectures focus on providing QoS as requested by application, they do not take an advantage of a possible aggregation of resources due to commonality between user requests for a particular service.

For example, it would be desirable to determine commonality for the usage history of a particular multimedia content, e.g., bursts of requests within short time intervals, the proximity of origination addresses of requests, etc. In addition, the architectures described above do not allow for dynamic monitoring and recording of resource consumption for individual services as well as for groups of related services, with the purpose of calculating cost of service for individual clients.

Thus, it would be highly desirable to provide a mechanism capable of providing an adaptive resource management function for distributed resources that could, on-demand, shape system capacity to the needs of the environment where such mechanism is suited for the next generation of the Internet.

Moreover, it would be also desirable to provide a mechanism capable of integrating capacity-shaping mechanisms with the ability to manage and drive load distribution across collections of widely distributed media servers.

Hafid et al. "Quality-of-service adaptation in distributed multimedia applications", Springer Multimedia Systems 6, 299-315 (1998) discloses a Quality-of Service (QoS) negotiation framework where a central quality-of-service manager controls the negotiation process. The negotiation process is used to obtain the object resources, such as movies stored on multiple servers, i.e. replicated. However, no negotiation process is used for obtaining servers to replicate the object resources onto.

It is therefore an object of the present invention to provide an improved and efficient system and method for request management; this object is achieved by the system as defined in claim 1, the method as defined in claim 8 and the program storage device defined in claim 10; embodiments of the invention are defined in the dependent claims.

A request management system is provided for placing requests for multi-media objects from independent clients onto servers distributed throughout a network having said objects, each server having a capacity for storing multi-media objects and, a streaming resource for delivering requested multi-media objects to clients, the system comprising: intermediary control means for receiving placement inquiries for said multi-media objects from said clients, a requested object having a unique identifier associated therewith; means for locating object replicas associated with the given object identifier and stored at one or more said servers; means for determining a willingness of any such server to consider said placement inquiries for said object replicas; and, means for generating one or more placement inquiries to a willing server according to a predetermined policy, said intermediary control means forwarding a placement inquiry to said willing server.

A method is provided for shaping demand for multi-media objects stored at one or more servers distributed throughout a network, each server device having a capacity for storing multi-media objects and, a streaming resource for delivering requested multi-media objects to clients, the method comprising: receiving requests for said multi-media objects from independent clients, each requested object having a unique identifier associated therewith; locating object replicas associated with the requested object identifier that are stored at one or more said servers; determining a willingness of any such server to consider a placement inquiry associated with said request for said object replicas; and, generating one or more placement inquiries for said object to a willing server according to a predetermined policy, and forwarding a placement inquiry to said willing server.

A system is provided for dynamically controlling amount of object resources in a distributed network of servers, each server having a capacity for storing and streaming said object resources to clients, said system comprising: a) means for predicting a demand for object resource; b) means for monitoring capacity of said servers in said network for storing and streaming a requested object resource; and, c) means for generating one or more dynamic replicas of said object resource based on said predicted demand for said object resource and said available capacity and automatically temporarily placing object replicas at servers throughout said network when demand is predicted to increase and deleting replicas when demand is predicted to decrease.

A system and method are provided for managing and controlling the distribution, sharing and pooling of resources in an Internet/World Wide Web environment, that implements an intermediary control node between clients and servers for managing the distribution and placement of requests for multimedia objects onto servers as well as manages the placement of objects onto servers according to a set criteria.

A system and method are provided for managing and controlling the distribution, sharing and pooling of resources in an Internet/World Wide Web environment, that includes matching predicted demand for (multimedia) web objects to available capacity on web servers and, dynamically shaping both demand for multimedia objects and capacity of multimedia web servers by: (a) controlling the number of replicas associated with an object; and, (b) controlling the placement of these replicas.

Thus, according to the preferred embodiment, there is provided an autonomous self-regulated system providing integrated load distribution and resource management functions on a distributed computer environment. The system matches predicted demand to available capacity and in the pursuit of this objective, mechanisms are provided to shape demand and capacity according to certain criteria.

A system and method are provided for managing and controlling the distribution, sharing and pooling of resources capable of providing multimedia content in an Internet/World Wide Web environment, in such a manner that is beneficial, accountable, and seamless to the users.

An intermediary control node (controller) is provided between clients (e.g., web browsers) and servers (e.g., media/web servers) for managing the distribution and placement of requests onto servers as well as managing the placement of content onto servers. The controller acts as an intermediary that receives requests and formulates placements for these requests according to some set criteria. To do so, the controller explores, negotiates, and recommends placements of requests onto servers on behalf of a client.

The system relies on the controller for resource management of the distributed object collections across media/web servers. Within the context of the present invention, resource management is used to refer to the reservation, configuration, control, handling of exceptions, and release of resources needed to efficiently provision multimedia content to clients. Particularly, the controller attempts to match predicted aggregated demand for objects (across one or more servers) to available capacity on servers. To this end, predicted demand statistics are generated by analyzing the aggregated request stream presented to the intermediary control node whereas available capacity is loosely estimated by a special protocol between servers and the controller node. The controller relies on a capacity shaping mechanism for dynamically controlling the placement and number of objects on servers.

Further to this end, the present invention relies on two complementary notions: a global server for providing a spare, shared, and highly available capacity; and, a transient replica which models a multimedia object as a scalable and relocatable resource that responds to demand and capacity conditions. Together, they provide a system that may be used to assist a multimedia server by temporarily increasing the overall system capacity to match the predicted demand associated with a particular multimedia object. These complementary notions are additionally used to provide a system and method to dynamically control the placement and number of replicas on an Internet environment in response to constraints between demand and capacity. Thus, the system of the invention provides efficient methods to monitor demand and capacity and determine when to add transient replicas to and delete transient replicas from, i.e., shape capacity of, global servers. Particularly, on-demand replication is used as a tool to increase the likelihood of finding an available replica during the processing of subsequent requests for the same object.

It is important to note that the present invention achieves the above while preserving the autonomy of servers over the control of their resources. The resource management system is decentralized in that resource management controls (e.g., admission control, resource reservation, resource measurements, resource scheduling, etc.,) are implemented locally, at each server, and not centralized at the controller. Controllers do not directly manage servers and their resources. Instead, controllers represent agents that forward control recommendations to servers. This is achieved without imposing stringent monitoring requirements on the controller about the state of resources and servers on the system. Signaling protocols between servers and controller allow controllers to maintain resource management state during run-time in a fault tolerant way. The system tradeoffs signaling overhead against state maintenance overhead.

### Brief Description of the Drawings

Further features, aspects and advantages of the apparatus and methods of the present invention will become better understood with regard to the following description, appended claims, and accompanying drawings where:
Figure 1 illustrates a typical distributed computer system consisting of clients, servers, and objects stored in the server that may be requested for delivery to clients.
Figure 2 depicts in further detail the components of the server devices found in the typical distributed computer system depicted in Figure 1.
Figure 3 illustrates a typical distributed object system including an Object Request Broker system enabling location and management of any object in the distributed collection.
Figure 4 illustrates a distributed computer system (100) according to the preferred embodiment of the invention that includes an intermediary controller device for handling requests from clients.
Figure 5 illustrates a block diagram depicting the major components of the controller device.
Figure 6(a) illustrates an example replica directory (666) including schema and data associated with the replica directory.
Figure 6(b) illustrates an example server directory (656) including schema and data associated with the server directory.
Figure 7 illustrates, via an example, a timeline diagram for the placement management protocol.
Figure 8 illustrates a distributed computer system for dynamically controlling the placement of replicas onto global servers where demand and geographic trends are used to motivate the differentiation between persistent and transient replicas.
Figure 9(a) illustrates a specific three color watermark strategy used by a server to associate its utilization state into a normalized willingness indicator that the controller can use across all servers.
Figure 9(b) shows the application of the same watermark scheme by a different server.
Figure 10 illustrates in further detail the modification of a server device according to the invention.
Figure 11(a) illustrates a stream of requests as observed by a controller and the use of bounded time intervals for the generation of demand statistics.
Figure 11(b) illustrates via an example, a method used in the preferred embodiment to generate the geography density indicator for the request streams shown in Figure 11(a).
Figure 11(c) illustrates via an example the demand statistics stored by the controller corresponding to Figures 11(a) and 11(b).
Figure 12 depicts a high level diagram of the replica management process and its trigger-based interaction with the request management system.
Figure 13(a) is a flow chart depicting the preliminary oversupply check implemented by the request management system to activate the capacity shaping mechanism (i.e., the replica management system).
Figure 13(b) is a flow chart depicting the preliminary scarcity check implemented by the request management system to activate the capacity shaping mechanism.
Figure 14 is a flowchart depicting the replica creation process.
Figure 15 is a flow chart depicting the replica placement process.
Figure 16 is a flow chart depicting the replica deletion process.
Figure 17 is a flow chart depicting the demand vs. supply check used in the preferred embodiment.
Figure 18 illustrates a timeline diagram for the replication management protocol.

### Detailed Description of the Preferred Embodiment

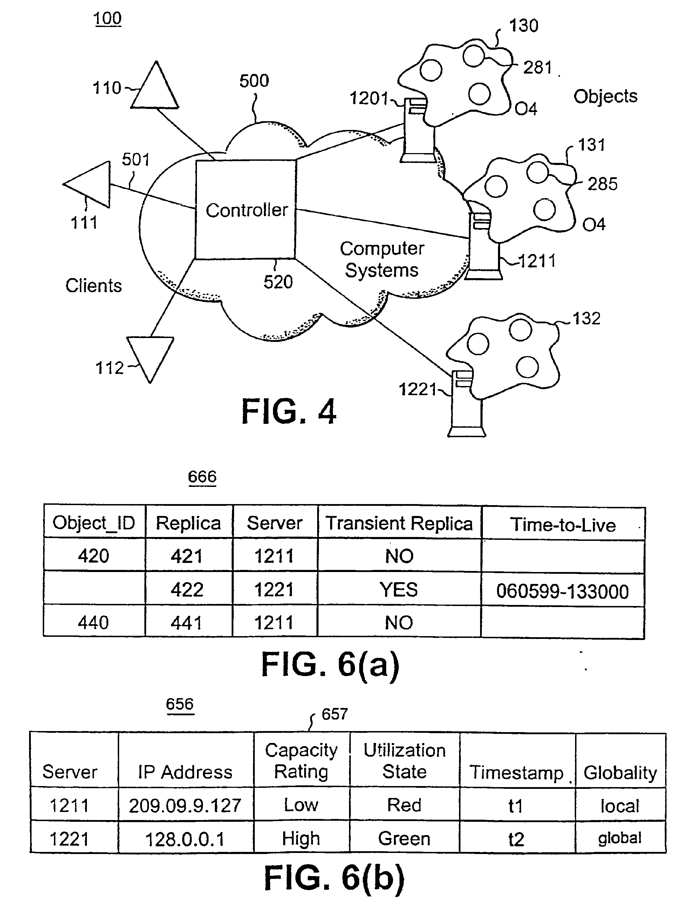

Figure 4 illustrates a distributed computer system 100 according to the preferred embodiment of the invention comprising clients (110, 111, 112, etc.,), servers (1201, 1211, 1221), object collections (130, 131, 132), and object requests (500) from clients. As shown in Figure 4, the distributed computer system additionally comprises an intermediary controller (520) for handling requests from clients. The controller (520) particularly places requests (e.g., 501) from a client (e.g., 111) onto a server (e.g., 1211) according to some set criteria as described in greater detail hereinbelow. For example, in the preferred embodiment the controller is used to introduce load balance and fault tolerance over the placement of client requests across the distributed object collections (130, 131, 132). Furthermore, as will be described in greater detail herein, the intermediary controller manages the placement of multimedia objects themselves onto servers according to some set criteria.

As will be explained in greater detail herein, implementation of the intermediary controller (520), and particularly, an object directory service, such as an ORB, enables characterization of the system 100 as a distributed collection of objects as opposed to a collection of servers. Thus, unlike the prior art system 10, the various collections of objects (130, 131, 132) found at each independent server (1201, 1211, 1221) aggregate now into a distributed collection (130, 131, 132) of objects and object replicas which model a multimedia object as a scalable and relocatable resource in accordance with demand and capacity conditions. For example, Figure 4 shows object replicas (281, 285) associated with object 04 with one replica (281) found on the collection (130) on server (1201) and the other replica (285) found on the collection (131) on server (1211). As will be described in greater detail herein, servers may be considered as local which maintain persistent (object) replicas, or global, which maintain transient replicas. Global servers are dedicated for providing a spare, shared, and highly available capacity for maintaining replicated (transient) objects.

According to the invention, the temporal sequence of client requests presented to the controller (520) is referred to as the request stream or demand. A successful client request (e.g., 140) results in a streaming connection (e.g., 150) (herein also referred to as a stream). Given a particular request for some multimedia object, the measure of the number of concurrent streams that may be made available by such a server given the available resources is herein referred to as the available capacity of a multimedia server. Furthermore, as understood by the controller (520), the measure of the number of streams (of a requested multimedia object) that may be supported across the overall system at a current time is also herein referred to as the available system capacity. In particular, in the preferred embodiment, statistical measurements are used to loosely estimate available capacity in an efficient manner in a wide area network distributed environment such as those expected of the emerging Internet2.

It should be noted that standards for controlling multimedia streaming data over the World Wide Web such as H.323 and Real Time Streaming Protocol (RTSP) are already in place and implemented to provide the streaming capabilities they are intended for. For example, whereas H.323 is designed for videoconferencing across small groups, RTSP is designed to efficiently broadcast audio-visual data to large groups. Each standard describes a client-server application-level protocol for controlling the delivery of data with real-time properties. For example, the RTSP establishes and controls either a single or several time-synchronized streams of continuous media, such as audio and video and uses transport protocols such as UDP, multicast UDP, TCP, and Real Time Protocol (RTP) to deliver the continuous streams.

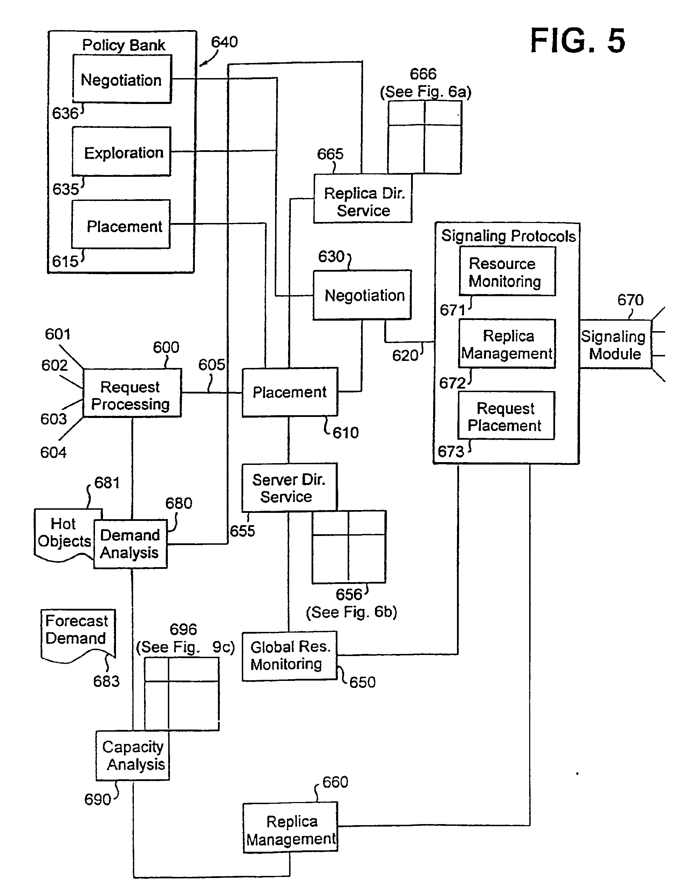

Figure 5 is a detailed block diagram of the intermediary controller device (520) implemented for managing the distribution and placement of requests (i.e., for multimedia objects) onto servers as well as to manage the placement of multimedia objects themselves onto servers. As shown in Figure 5, a request processing module (600) is provided for receiving requests (601, 602, 603, 604) from clients, the requests including a unique object identifier, and feeding these requests to a placement module (610). The placement module (610) applies a placement policy (615) to each request and generates a set of tentative placement queries (620) for the request. Particularly, the placement module (610) interfaces with both a replica directory service (665) (for maintaining the replica directory (666) as described herein with respect to Figure 6(a)) and a server directory service (655) (for maintaining the server directory 656 as described herein with respect to Figure 6(b)) to generate the tentative placements (620). That is, the placement module (610), replica directory service (665), and replica directory (666) operate in conjunction to locate all replicas associated with the given object identifier of the received request. Further, the placement module (610), server directory service (655) and server directory (656) operate in conjunction to determine the willingness of any such location (holding a replica) to consider new placement inquiries (620), as will hereinafter be described.

Figure 6(a) depicts an example replica directory (666) maintained by the replica directory service (665) and including schema and data associated with a replica directory implemented by the system 100 of the invention. An object identifier (e.g., 420) is assigned to each different object (e.g., 04, etc.) in the distributed collection for uniquely identifying an object throughout the distributed collection. According to the invention, original client requests may be pre-processed by an auxiliary system (not shown) capable of transforming an ambiguous request from a client into a uniquely identifiable object identifier. For each object identifier, one or more replicas may exist throughout the distributed collection. For example, in Figure 6(a) there is illustrated the case of two different object identifiers (420, 440). Whereas the first object identifier (420) is currently associated with two replicas (421, 422), the second object identifier (440) is associated with only one replica (441). Replicas for the same object identifier are distributed across different servers. For example, the replicas (e.g., 421, 422) of object identifier (420) reside on different servers (1211, 1221), respectively. Additionally associated with each object replica is a time-to-live timestamp which indicates the degree of transiency of the replica. As will be described in greater detail herein, when the time-to-live deadline has expired, a request to prolong the object replica's existence at the global server is initiated.

As the replica directory (666) needs to be resilient to failures, data about persistent replicas and their associated local servers may be safely checkpointed without substantial risk of loss of data. However, only data about transient replicas is volatile. To recover from a loss of data about transient replicas, the controller (520) simply queries global servers for a list of currently unexpired transient replicas. It should be noted that the above-mentioned server directory (656) (Figure 6(b)) enables the controller to find out the identity of all global servers. By querying each global server in the controller's domain, the controller may re-populate the replica directory on demand. It should be noted that the list of global servers may be checkpointed as well to avoid risk of loss of data. A skilled artisan will appreciate that replicas unaccounted for after the re-population of the replica directory (666) will observe increasingly less utilization as no further requests will be placed onto this particular global server by this controller.

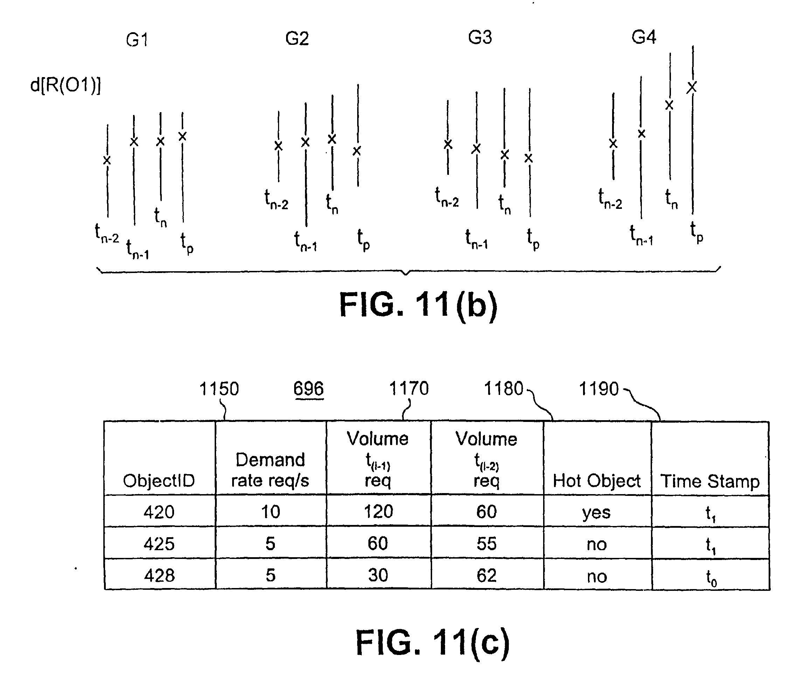

Furthermore, as will be described in greater detail herein with respect to Figure 11(c), the replica directory maintains statistics associated with requests for each object identifier including: the predicted demand "d," the dominating geography indicator "g" describing a dominating geographical area associated with requests, and a demand volume statistic or rate "r". Furthermore, a time-to-live timestamp is associated to each replica. Once the timestamp expires, the global server currently owning the transient replica requests a renewal from its controller (i.e., the controller who placed this replica). At this point, the controller could either drop the replica by denying its renewal or renew it by extending its time-to-live (thus re-populating the database with this new replica). If the controller denies the renewal, then the transient replica could end up being deleted by its global server.

Figure 6(b) depicts an example server directory (656) maintained by the server directory service (665) and including schema and data associated with the server directory. A server identifier (e.g., 1211) is assigned to each different server in the distributed computer environment (160). The server identifier is assumed to be fixed and not to be changed. Examples of possible server identifiers are the server's fixed IP address or hostname (e.g., Name1 (1211) and Name2 (1221)). For each server identifier, a special field referred to as the server's capacity rating is used to rate the overall capacity of the server. That is, the capacity rating is used by the controller to differentiate between servers having substantially different resources. In the preferred embodiment, a two-tier rating is used. The preferred embodiment differentiates between two capacity ratings: HIGH (e.g., supercomputer/mainframe) and LOW (e.g., an NT-class server), however, a skilled artisan will appreciate that possibly other different rating schemes could be used instead. The capacity rating is an inherent parameter of a server and it is set during initialization. For example, a default rating for a server may be a LOW capacity. According to the invention, the capacity rating allows the controller to differentiate between high and low capacity servers without requiring the controller to track the actual available capacity on a server. Global servers for maintaining replicated (transient) objects receiving are typically HIGH capacity servers.

Additionally, for each server identifier, a special field is used to store the last reported utilization/willingness state for that server (for example, server (1211) is RED whereas server (1221) is GREEN. In addition, for each server, the time of its last utilization/willingness state report received by the controller is also stored. For example, in Figure 6(b), server (1211) has associated timestamp t1 whereas server (1221) has associated timestamp t2. Last, a field indicates whether the server is a global server or a local server. For example, the server (1211) is known by the controller to be a local server whereas the server (1221) is known to be a global server. It should be understood that a server can be both global and local, in such case, two different entries would be used. One entry would describe the virtual local server and another would describe the virtual global server.

Referring back to Figure 5, the controller (520) further includes a negotiator module (630) provided for choosing one or more tentative placements (620) and executing a query strategy to query the servers associated with those tentative placements. The resulting query strategy is produced according to an exploration policy (635) and a negotiation policy (636). The negotiation policy is implemented to refine multiple tentative placements and enable choosing based on some criteria such as cost. A policy bank (640) is used to store and load the various policies (e.g., 615, 635, 636) and allows customization of the controller algorithms as described herein. It should be understood that these policies may either be loaded during initialization or on-demand.

As further illustrated in Figure 5, the controller (520) is further provided with a global resource monitoring module (650) for monitoring the servers. Resource monitoring data is provided by the server directory service (655). A replication management module (660) is provided for applying heuristics to manage the lifecycle of a replica, and particularly determine whether a replica ought to be created, destroyed, or moved. Replica data is provided by the replica directory service (665). A control signaling module (670) provides an interface to servers via three signaling protocols: a resource management protocol (671), replica management protocol (672), and placement management protocol (673). According to the invention, the placement module (610) operates in conjunction with the placement management interface (673) to compose and forward the placement inquiries (620), according to a placement (615) or exploration policy (635), to one or more of such willing and capable locations. A placement inquiry that successfully passes admission controls on a server is referred to as a candidate admission. A candidate admission is unlike the traditional notion of a guaranteed admission in that resources are only tentatively reserved by the server for only some relatively short duration (i.e., in the order of several seconds) after which is the candidate admission has not been secured by the server it is dropped. As will be further explained herein in greater detail, the negotiation module (630), negotiation policy module (636) and placement management interface module (673) operate in conjunction to: choose and secure a candidate admission into a guaranteed admission from among a set of positively acknowledged candidate admissions; to invalidate all other candidate admissions for servers other than from the server previously chosen; and, invalidate all other pending placement inquiries.

Further provided as part of the controller device (520) is a demand analysis module (680) for examining the stream of requests (605) and generating a list of the most requested objects (681), hereinafter referred to as "Hot Objects", the most dominating geographies (682) for these objects, and, forecasts about their demand (683). These statistics are fed to the replica management module (660). A capacity analysis module (690) examines available capacity for each of the most requested objects and feeds available capacity to the replication management module (660).

As further shown in Figure 5, the system of the invention relies on three interfaces to relay control information between the controller (520) and the servers: a resource management (671) interface, a replica management (672) interface, and a placement management interface (673). A skilled artisan will appreciate that there exists several protocol standards that may be used to facilitate the implementation of these interfaces. For example, the resource management protocol may be implemented by building on functionality provided by RSVP and RTSP. On one hand, the Reservation Protocol (RSVP) is a resource reservation setup protocol designed for an integrated services internetwork. An application invokes RSVP to request a specific end-to-end QoS for a data stream. RSVP aims to efficiently set up guaranteed QoS resource reservations which will support unicast and multicast routing protocols and scale well for large multicast delivery groups. The RSVP protocol would be used, as expected, to provide end-to-end resource reservation from a multimedia server to its client(s) on a per-connection basis. On the other hand, RTCP is a measurement and control protocol that works in conjunction with RTP. RTCP control packets are periodically transmitted by each participant in an RTP session to all other participants. Feedback of an application-level information may be used to control performance and for diagnostic purposes as required by the present invention. The RTCP protocol would be used to feed back measurements (i.e., the resource management protocol MON_STATUS and MON_REQUEST messages) between a multimedia server and its controller. Whereas RSVP provides a mechanism to implement quality of service negotiation between distributed parties, RTCP provides a mechanism to relay measurements and performance feedback information between distributed parties. Similarly, the replica management protocol could be built of abstractions provided by the Internet file transfer (FTP) and the RSVP protocols. Whereas FTP permits the movement of content at the best possible effort in a pipe between servers, the RSVP permits the specification of the pipe in an integrated services network.

As mentioned, the system of the invention provides integrated load distribution and resource management functions on a distributed computer environment. Preferably, the controller has several degrees of freedom in matching demand to available capacity. First, it controls and shapes the distribution and placement of requests onto servers. Second, it controls and shapes the distribution and placement of replicas across servers (i.e., capacity) according to some set criteria. Last, the controller is capable of dynamically creating, destroying, and moving replicas across servers as deemed necessary by the mechanisms of the present invention in order to achieve its goals. These functions will now be explained in greater detail herein.

### Request Management System

As described with respect to Figures 4 and 5, the present invention enables the placement of a request (e.g., 501, 601), given a unique object identifier, onto a server (e.g., 1211) having a replica of the requested object, via an intermediary controller device (520). According to the preferred embodiment of the invention, the controller device implements several mechanisms to dynamically reshape demand according to immediate capacity: 1) in a first approach, requests may be upgraded or downgraded according to the needs of the controller and the parameters of the request. In particular, the controller may explore placement options for a request based on slightly dissimilar parameter values to those found in the original request; 2) in a second approach, similar requests having temporal proximity may be delayed and grouped according to the needs of the controller and the particular constraints of each individual request. In particular, over some arbitrary time interval, the controller may buffer, re-organize, and batch a group of similar requests to a global (multimedia) server with multicast capability, for example; and 3) in another approach, requests sharing similar geographical characteristics may be grouped according to the needs of the controller and the availability of more cost-efficient resources in a geographical area. In particular, the controller may associate clients as well as servers with a geographical constraint such as timezone (e.g., EST) or available bandwidth (e.g., T1-line) to then bias the placement of requests based on these criteria.

To this end, the controller functions as a statistics gathering point. In particular, two types of statistics -demand statistics and capacity statistics -are maintained by the controller. On one hand, demand statistics are used by the controller (520) to describe characteristics about the past requests. In the preferred embodiment, predicted demand statistics are generated by the controller by analyzing the aggregated request stream from different clients as observed by that particular controller. For example, statistics are generated to characterize the density of the demand, the volume of the demand, and the dominating geography associated with the demand. On the other hand, capacity statistics are used by the controller to describe characteristics about the capacity of multimedia servers to accept placements for multimedia objects. In the preferred embodiment, available capacity is loosely estimated by servers and forwarded to the controller (520) as deemed necessary by a server.

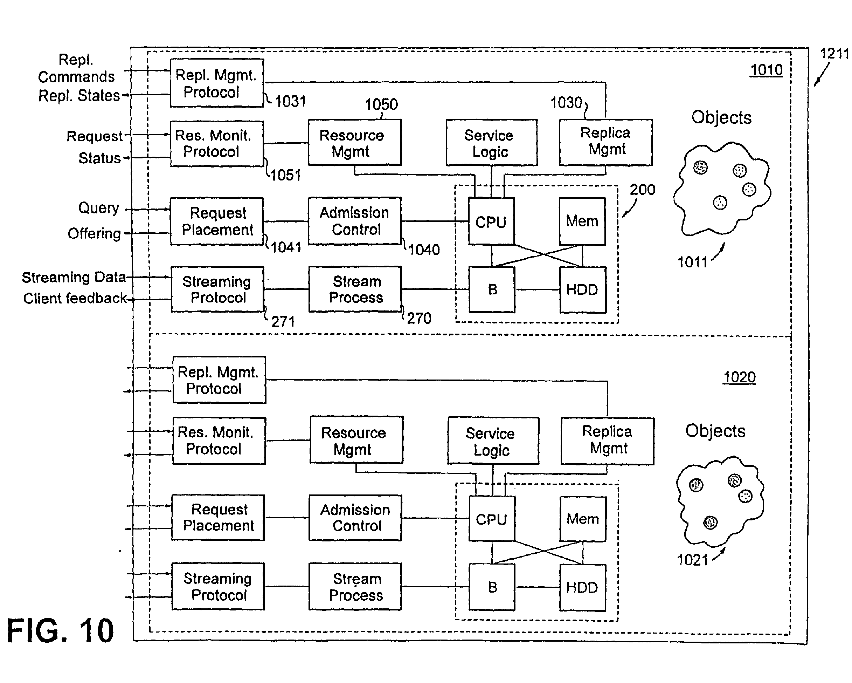

According to the preferred embodiment of the invention, the system is decentralized in that admission controls are implemented locally at each server. Figure 10 is a detailed illustration of the global server 1211 in Figure 4. As shown in Figure 10, each server (e.g., server 1211) is provided with an admission control mechanism (1040, 1041) enabling a server to grant or deny a candidate admission to a placement inquiry (query) request and acknowledge this back to the controller (offering). The admission control mechanism (1040, 1041) further functions to promote a candidate admission into a guaranteed admission, and, to invalidate a candidate admission. The controller device (520) does not perform any admission nor resource reservation tasks. A skilled artisan will appreciate that the invention is applicable to a collection of servers as well as server clusters. In particular, because a centralized admission control is associated with each server cluster, each such cluster would appear to the controller as a single server of HIGH capacity. Consequently, the controller does not make any particular differentiation between a server and a server cluster.

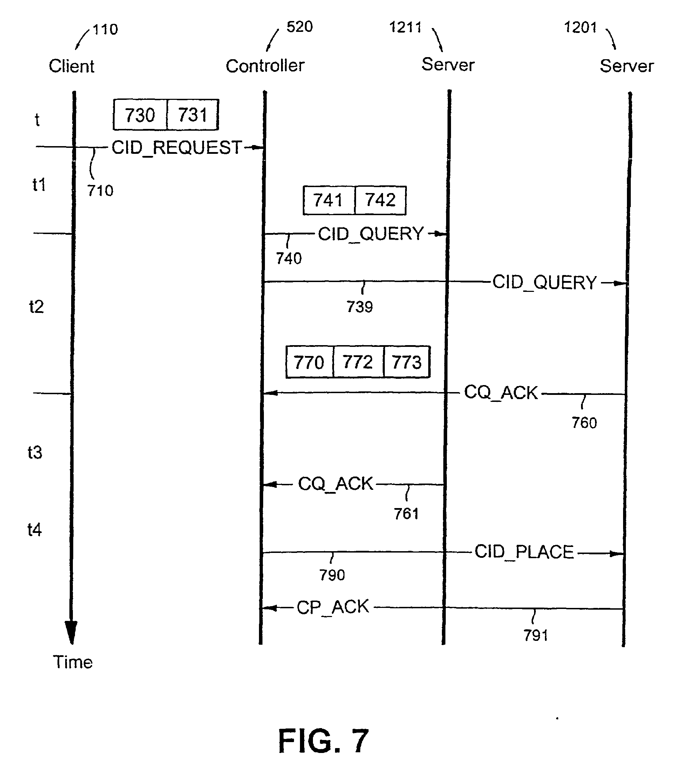

A signaling protocol between controllers, clients, and servers, herein referred to as the placement management protocol, shown and described in greater detail with respect to Figure 7, is used between these distributed parties to allow the controller (520) to place a client request onto a server. The protocol comprises the implementation of at least the following messages: a CID_REQUEST message used by the client to submit a request to the controller; CID_QUERY, message used by the controller to explore candidate placements across servers; and CID_PLACE message used by the controller to request the promotion of a candidate admission into a guaranteed admission. In addition, each of these messages is associated with an acknowledgment message CX_ACK which message is used by a signaling party to respond to any of the above asynchronous messages: CID_REQUEST, CID_QUERY, and CID_PLACE. Thus, for a CID_QUERY message, the CQ_ACK message returns a positive acknowledge indicating that a candidate admission has been granted. The message indicates the expiration deadline of the admission. A skilled artisan should appreciate that this expiration deadline may be configured on a per-server basis to differentiate the aggressiveness of a server in pursuing a new placement. Furthermore, in some embodiments, it may be possible to make this deadline variable over time based on the available capacity of the server. For a CID_PLACE message, the CP_ACK message relays a flag indicating whether or not the candidate admission has been promoted into a guaranteed admission.

In general, the process of mapping a request onto a server is decomposed into three stages by the controller. First, the controller proceeds to identify one or more servers, if any, from those servers that contain a replica of the requested object that are known to be willing to consider admission queries. Second, the controller proceeds to query one or more of these servers with an admission query under some selected parameters possibly provided to the controller in the CID_REQUEST message. In the present invention, this process may iterate until an agreement is negotiated between server and controller with possibly the intervention of the client. Last, the controller proceeds to place the request into one of the servers found to be capable in the last step. As the former two stages may be iterated before the later stage is entered, then, according to the present invention, the mapping of a request onto a server is an iterative process including exploration and negotiation across a dynamic set of feasible candidate admissions.

As mentioned herein, a mechanism for tracking the location of each replica is provided using the controller's replica directory service (665). Given a unique object identifier, a lookup to the replica directory (666) returns the location of all corresponding replicas on the system. In the preferred embodiment, the location of a replica is represented as just a server address (such as a hostname or an IP address). It should be noted that just one replica per server is sufficient.

Figure 7 illustrates a timeline diagram for the placement management protocol. As shown in Figure 7, at time t, the controller device (520) receives a CID_REQUEST message (710) from the client, e.g., 110. At time t1, the controller (520) sends CID_QUERY messages (739,740) to two servers (1201, 1211, respectively) known to be willing to consider admission queries. Each CID_QUERY message contains the unique identifier (741) of the object being requested in addition to other parameters (742) such as the resolution, quality, cost, and/or maximum delay in the form of name-value pairs. These parameters (742) may correspond to the parameters (731) specified by the client in the CID_REQUEST message (710) or a refinement of these. These parameters (742) may be negotiated with each server (1201, 1211) independently according to the negotiation policy (636) associated with this particular request.

At time t2, the server (750) responds to the controller (720) via the CQ_ACK message (760). This message contains a flag (770) indicating whether a candidate admission has been granted by the server (1201). The message also contains the expiration deadline (772) of the candidate admission and negotiated name-value pairs, if any, for the corresponding CID_QUERY message parameters (773) that this particular server (e.g., 1201) is willing to provision with the candidate admission.

Similarly, the timeline depicts at time t3 that the second server (1211) responds to the controller (520) via another CQ_ACK message (761). When a CQ_ACK message indicates that a candidate admission is being held by a server, the parameter fields of the CQ_ACK message (e.g., (773)) describe the specific parameter values that the corresponding server is willing to provide. The controller waits for one or more CQ_ACK (760, 761) within reasonable time, e.g. on the order of seconds. Then, based on its negotiation policy (636), the controller (520) may choose one (say, 760) of the CQ_ACK responses received so far (760, 761).

It is also possible that no candidate admission could be secured. This may be due to several reasons such as: (a) lack of resources at all of the servers, (b) lack of agreement on the negotiation parameters, (c) expiration of the negotiation deadline, or (d) a combination of the above. Preferably, a negotiation deadline is provided to enforce fairness across all requests. This way the controller does not overspend time in needless searches for unfeasible requests at the expense of other requests. Clearly, the negotiation deadline should be a system parameter. In particular, because of the distances between servers and objects, this deadline ought to be in the order of tens of seconds. In any case, the controller refers to the negotiation policy (636) associated with this specific request to decide what the proper treatment for this condition should be. Several possible treatments may be applied such as to request a new set of parameters (731) or to re-evaluate the exploration policy (635) for seeking candidate admissions and then reissuing CID_QUERY messages to servers in this new set.

The timeline depicts at time t4 that the controller (520) to send a CID_PLACE message (790) to the server (520). This message contains the unique identifier (730) and causes the server to upgrade the candidate admission into a guaranteed admission. The server acknowledges this upgrade via the CP_ACK message (791).

Referring back to Figure 5, each placement recommendation (620) is associated with a mapping (also known as placement) policy (615). For example, once such placement/mapping policy (615) could be specified as: "always place requests onto GREEN replicas on servers of LARGE capacity". Once a candidate admission associated with a placement is chosen by the controller, the placement becomes guaranteed by the controller. To this end, the controller secures a guaranteed admission for the placement and polices the placement. The terms of such guarantee are specified by the placement policy of the controller (e.g., "always place requests onto GREEN replicas, prefer HIGH capacity servers, and make such placements tolerant to server failures"). Consequently, the performance of such binding is monitored by the controller during its lifetime. Furthermore, during the lifetime of a binding, conditions may arise that may jeopardize the performance of the binding. For example, typical user non-linear interactivity (e.g., VCR stop, rewind, pause, continue) may jeopardize a binding created under a linear playback model assumption as that enforced by typical Video on Demand (VoD) servers. Similarly, server failures would typically abort a binding. Depending on the placement policy selected by the controller, the controller may guarantee the performance of such binding regardless of whether such conditions arise. For example, for a binding with a fault tolerant guarantee, if the server drops the binding, the controller will attempt to autonomously seek a new placement and resume progress there.

Further with respect to Figure 5, it is an aspect of the invention that instead of exploring each possible placement recommendation independently, the controller may explore multiple placement recommendations (620) at the same time. This behavior is specified to the controller via an exploration policy (635). For example, one such an exploration policy could be specified to be as: "iterate at most k times and under each iteration explore placements across at least 1 but no more than m servers". The exploration policy can be expensive for requests that turn out to be unsuccessful. For example, under such policy a total of at least N = k·l protocol negotiations of at least two (2) messages each were started for every unsuccessful request. The present invention allows each request to be associated to an exploration policy. Clearly, such simultaneous exploration of servers and replicas may result in the same request being mapped onto different servers. It should be also noted that given a specific request, the controller might produce zero or more placement recommendations. For example, when available capacity is insufficient to meet a request, no placement recommendation is produced.

Referring back to Figure 7, it should be understood that pending CID_QUERY messages may be abandoned by the controller. For example, in the present invention, the controller simply abandons placement queries that are no longer of interest to it (for example, if the responses of queries exceed a maximum waiting time threshold). The configuration of this negotiation is specified by the negotiation policy (636) to the controller (Figure 5). For example, one such negotiation policy could be specified as: "negotiate a set of parameters x with the server such that the cost difference between these parameters y and the original parameters x (731) is at most z".

### Aggregation-Driven Response

As mentioned, the system of the present invention intends to match server capacity to predicted demand. To this end, the invention implements the controller (520) for resource management by monitoring demand and monitoring capacity in the distributed computer system. Particularly, the controller attempts to match predicted aggregated demand for replicas to available capacity on servers and placement of replicas on servers. Predicted demand statistics are generated by analyzing the stream of requests from different clients. Available capacity is estimated by monitoring and querying servers.

The controller (520) stores persistent and dynamic state and data about objects, replicas, servers, requests, and their placements. For example, in the preferred embodiment, directory services are used to store data about the demand for a particular object, the location of its replicas, the capacity of a given server, and the time distribution of requests. It is understood that, in the preferred embodiment, these data structures are rendered resilient to loss of data as well as data corruption.

The selection of which objects are valid replication candidates (herein referred to as "hot objects") is made according to criteria such as the predicted demand for an object identifier. In the preferred embodiment, the selection of replication candidates is driven by an online analysis of aggregated predicted demand against available capacity. That is, according to a first embodiment, replica management attempts to match predicted demand to available capacity. Alternately, replica management attempts to match predicted demand to available capacity subject to geographical proximity of clients to some object identifier.

To this end, the system of the invention aggregates requests into groups of requests having similar characteristics. For example, requests received during some bounded time interval from independent clients may be managed as a group for placement purposes by control servers according to some set criteria. Examples of criteria for relating requests include, but are not limited to: 1) geographical proximity of clients requesting the same object identifier; 2) commonality on requested constraints such as resolution and quality; and, 3) temporal proximity in the arrival time of requests for the same object identifier.

According to the invention, any particular request may be autonomously upgraded or downgraded by its controller in order to pool slightly dissimilar requests for the same object identifier into similar requests. This may be achieved, for example, by decreasing the sensitivity of the geographical proximity grouping criteria, decreasing the quality of the requested object, decreasing the sensitivity of the temporal proximity grouping criteria, or some combination of the above. Controllers may exercise this option or not based on client, request, and/or object characteristics such as cost preferences. It should also be noted that, however, the controller may decide to handle requests for the same object identifier in a manner that could be non-correlated with respect to other requests.

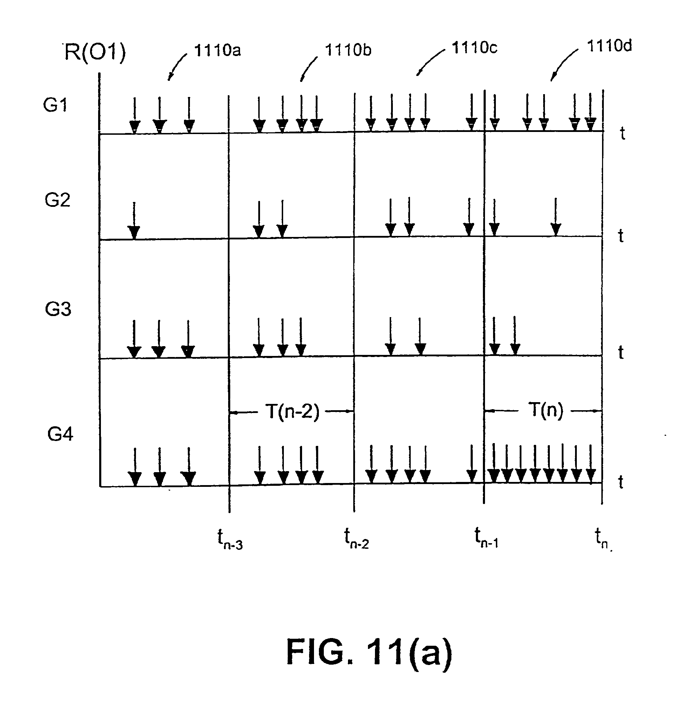

As mentioned, the controller device monitors the distribution of requests over time. In the preferred embodiment, statistics are maintained about the distribution of requests for each particular object identifier. Demand statistics provide information about the relative demand for an object identifier and enable the ranking of object identifiers in terms of demand. Preferably, statistics characterized for each object include: 1) the density of the demand; and, 2) the volume of the demand. In addition to these, statistics characterized for each object may additionally include 3) the dominating geography associated with the demand. The controller maintains demand statistics for each object on the distributed collection. Demand statistics for a particular object are updated on each request for such object. In particular, the controller flags objects found to be in high demand (i.e., hot objects). The computation of demand statistics performed in the demand analysis module (680) of Figure 5 for a particular object O1 is illustrated in Figures 11(a) through 11(c). A skilled artisan should appreciate that there exist many ways of computing these statistics in order to increase the confidence and accuracy of its estimates.

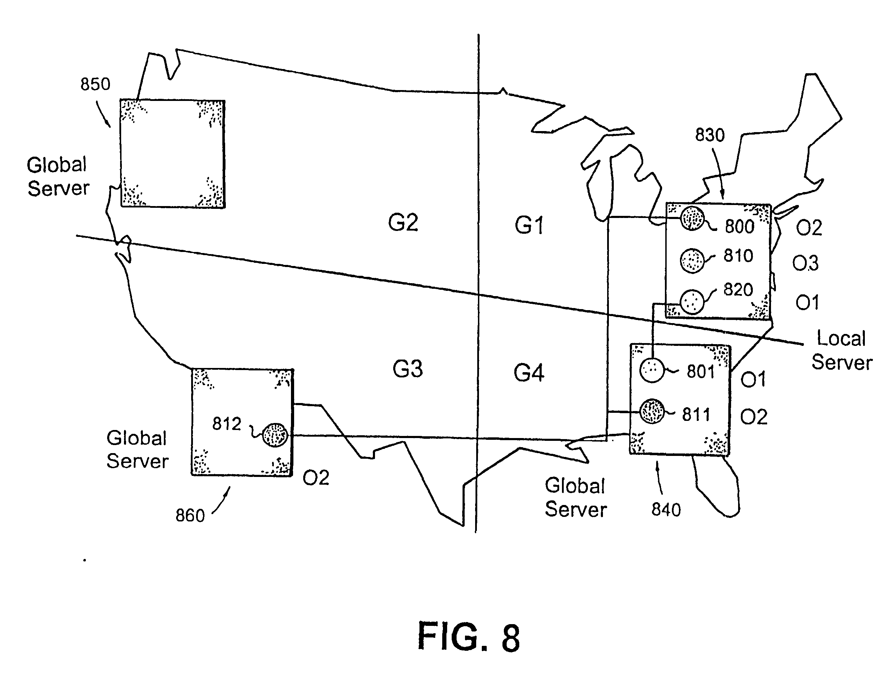

Figure 11(a) illustrates one or more request streams (1110a,..,1110d) across successive time intervals tn-3, tn-2, tn-1, t, as observed by a controller. Each request is associated with an object identifier (object O1), and a geography indicator G1, G2, G3, or G4 that is used to uniquely identify the geographic partition associated with the requesting client. For instance, Figure 8 illustrates a distributed computer system for dynamically controlling the placement of replicas O1, O2 and O3 onto various global servers 830, 840, 850, 860 where demand and geographic trends are used to motivate the differentiation between persistent and transient replicas. Transient replicas always reside on one or more global servers and have a dynamic lifetime as determined by the controller. Controllers manage the dynamic placement of replicas onto global servers in response to some set criteria such as cost, demand, and capacity, as will be explained. Preferably, the associated geographic partitions G1, G2, G3, or G4 are formulated a-priori by system administrators to match known geographic regions such as the Eastern Standard Zone or the Pacific Standard Zone or NorthEast and SouthWest USA. However, geographic partitions may be set dynamically by the controller. For example, the controller could group clients according to attributes or characteristics and use this criteria to aid in the placement of such similar requests.

Returning to Figure 11(a), there is illustrated the generation of a request density statistic for the requested object identifier (O1) in the request streams. The example depicted in Figure 11(a) illustrates the computation of the statistic during four time intervals (for example, T(n-2) (1110a) and T(n) (1110d)). The density demand statistic is computed as the number of requests per bounded time interval T(j). This example shows the demand statistic to change from 10/T during the first interval (T(n-3)) to 13/T on the second interval (T(n-2)), to 15/T in the third time interval, to 16/T in the last time interval shown. It should be noted that demand statistics may be smoothed before being used by the controller so as to increase their robustness.

Figure 11(b) additionally illustrates the computation of the dominating geography statistic corresponding to Figure 11(a). In this example, the system is divided into the four geography partitions (G1, G2, G3, G4) which are known a-priori. Requests are tagged with their incoming geography before being analyzed by the controller. During each interval T(j), for each incoming request for a given object, the controller sorts these requests by geography partition and updates a request counter (not shown) associated with each geography partition. Thus, a monitoring of demand trends is performed for the request stream in each time interval. In Figure 11(b), the example geographic partition G4 indicates a predicted increase in demand for object O1 at time t(p) based on the steady increase in requests for the object O1 in prior time intervals. That is, the geographic partition G4 steadily becomes the dominating geography over other partitions G1, G2, and G3 during the four time intervals shown. Again, it should be noted that the dominating geography indicator may be smoothed before being used by the controller so as to increase its robustness.

Figure 11(c) depicts a further example of the schema and data structure (696) used to store the demand statistics maintained for each replica. For each object identifier, the controller stores statistics about its predicted demand. In accordance to current practices in forecasting and smoothing, moving window statistics are used. A time interval (herein referred to as T) is used to smooth demand statistics. A moving window of size K*T is used to forecast demand statistics. The type of smoothing technique used (e.g., exponential smoothed or uniform smoother) and the desired robustness or confidence on the smoother determines the number of intervals to smooth (K). The size of the time interval used for updating demand statistics should be sufficiently large, as this is needed to: (a) reduce overheads, (b) smooth transient effects, and (c) span a sufficiently large number of requests. On the other hand, the smaller values of T and K allow the controller to react more rapidly to changes on demand. Reasonable values in current practice for the internet domain are the use of an exponential smoother with K = 2 and T = [60,...,3600] seconds. Thus, in an example data structure shown in Figure 11(c), a request density statistic (1150) describes the density of requests associated with its corresponding object identifier as observed by this particular controller during the last few K time intervals T (i.e., j, j-1,..., j-k+1). The dominating geography indicator (1160) describes the dominating geography associated with its corresponding object identifier. The demand volume statistic (1170) provides a moving sum of the number of requests in the last K time intervals T. To assess whether demand for an object is high, the controller looks at the density and volume statistics. To this end, the controller looks for objects with high rate (volume), high density, and preferably both high density and rate (volume). Objects known to be in high demand are identified as such by the controller via the hot object Boolean field (1180). A YES in this field indicates that the object identifier is in high demand. Last, a timestamp (1190) is used to track the time of the last demand assessment. A skilled artisan will appreciate that assessments on measurements that are too old are to be avoided (preferably), as confidence on such assessment will be low. Preferably, the controller is not limited to tracking a dominating geography solely on an object identifier basis. For example, the dominating geography statistics may be tracked on a per replica basis. Such tracking enables the controller to efficiently detect whether a particular replica (associated with a given geography) ends up (in the long run) servicing requests from a different dominating geography. Consequently, a replica migration mechanism providing the ability to migrate a replica located on a server in some geographic partition onto a new global server where such server matches the dominating geography associated with past placements made to that replica may be used to correct such situation. The replica migration mechanism is implemented as part of the capacity shaping mechanism to be described in greater detail herein. Furthermore, a recent history of dominating geographies may be used to assess the stability of a shift in dominating geography associated with a given replica or object identifier.

The means employed for monitoring and estimating available system capacity are provided via the deployment and use of a resource monitoring subsystem. The resource monitoring system interfaces to servers through a resource management protocol which enables a server to report its available system capacity via a MON_STATUS message. Particularly, the MON_STATUS message relays a forecast of its future availability to the controller. This forecast is not binding, nor is it considered a contract by the controller. Instead, the forecast is considered to be an indication of the willingness of such server to consider future CID_QUERY messages described herein with respect to Figure 7. In the preferred embodiment, the willingness of a server to consider new requests is a function of its available capacity as described below. For this reason, the controller refers to this as the utilization/willingness state of a server.

According to the preferred embodiment of the invention, the purpose of the utilization/willingness state indicator described with respect to Figure 6(b) is twofold. First, from the viewpoint of the controller, the utilization/willingness indicator is used to address heterogeneity with respect to resource utilization measurements across servers. In particular, the preferred embodiment uses a three-color watermark as its utilization/willingness indicator which is server-independent. This scheme, in conjunction with the server's capacity rating, allows the controller to compare the relative utilization of different servers to processing future placement queries. As a result, the utilization/willingness of any server in the system is measured in terms of six (3x2=6) conditions resulting from three utilization states (GREEN, YELLOW, RED) and two capacity ratings (HIGH, LOW).

On the other hand, it should be noted that each server may independently set utilization/willingness indicator to suit its needs. In particular, a server could set its RED, GREEN, and YELLOW watermarks thresholds to values that suit their individual willingness as opposed to values that reflect particular utilization levels. Moreover, it is envisioned that such willingness values could change dynamically. Such changes would then represent behavioral changes on the response of a server to future demand. This second facet is referred to herein as the aggressiveness or willingness of a server toward acquiring placement queries. That is, from the viewpoint of the server, the utilization/willingness indicator scheme may be used by the administrator of such server to customize the aggressiveness or lack thereof of the server in pursuing placements from the controller. In other words, two servers with the same resources and identical physical location may observe very different placement inquiries depending on how aggressive their respective assigned utilization states are.

In particular, the administrator of a server may set the three utilization states (GREEN, YELLOW, RED) to threshold values that suit the service needs of that server's administration. For example, some servers could be interested in being perceived as highly reliable and with strong service guarantees. In such case, a server's administrator would customize the GREEN region to conservative values (e.g., low values such as 50% of true capacity thus providing to guarantee service at the expense of a 100% capacity over-engineering). On the other hand, other servers may like to be perceived as offering inexpensive services by trading quality of service such as occasional jitter or denials of service. In such case, a server's administrator would customize the GREEN region to aggressive values (e.g., high values such as 85% of the true capacity thus pushing YELLOW and RED regions to just a 15% slack). As a result, since YELLOW and RED regions represent resource slack used to accommodate replication requests and resource utilization randomness, decreasing this resource slack intrudes into the service guarantees made to accepted streaming connections in the GREEN area. However, such server would observe a larger number of placement inquiries from the controller. It is envisioned that such a server could then pick and choose among inquiries according to some greediness criteria such as revenue or demographics.

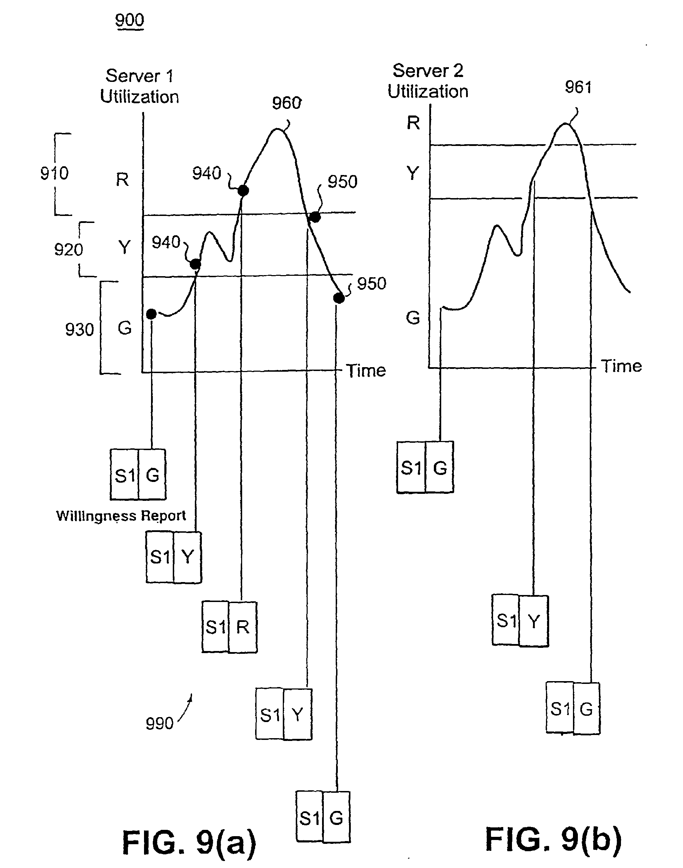

Figures 9(a) and 9(b) illustrate, via an example, the particular watermark scheme (900) as prescribed by the preferred embodiment. The watermark scheme (900) is used by a server to map its utilization state into a normalized willingness indicator (990) that the controller may rely on across all servers.

Particularly, Figure 9(a) depicts the utilization/willingness profile (960) of a particular server (e.g., Server 1) when subject to a utilization load. A RED condition (910) is used by a server to signal its controller that, currently, no more CID_QUERY messages will be considered by the server. A YELLOW condition (920) is used by a server to signal its controller that currently, no more CID_QUERY messages will be considered but that pending PLACE messages may be considered. Last, a GREEN condition (930) is used by a server to signal its controller that CID_QUERY messages will be considered. This flag is periodically updated by each server to indicate its current its utilization/willingness state. A server dispatches a MON_STATUS message to the controller only when it experiences a change on its willingness indicator. Although with three flags there are six conditions to consider, two conditions are considered important: 1) a change from GREEN to YELLOW/RED such as depicted at point (940); and, 2) a change from RED/YELLOW to GREEN (950).

Figure 9(b) likewise depicts a different utilization/willingness profile (961) obtained from another server (Server 2) when subject to the same utilization as for Server 1. It should be noted that each server could independently set its RED, GREEN, and YELLOW watermarks to values that suit their individual willingness to receive CID_QUERY messages. In addition to the utilization/willingness state, a capacity rating is used to indicate whether the server is a HIGH capacity or a LOW capacity server. The capacity rating determination of a server may be made based on a straightforward threshold check in terms of the maximum number of concurrent streams that the server provides on its GREEN state. Heretofore, a GREEN replica is used to refer to as replica on a GREEN server. Similarly, a GREEN server is used to refer to a server for whom its last utilization/willingness state (990) was reported to be GREEN (930).

Referring back to Figure 5, a resource monitoring/management protocol (671) permits a server to report its utilization/willingness state, e.g., its GREEN, and its capacity rating, e.g., low, to the controller. To report utilization/willingness and capacity to the controller, the server uses the MON_STATUS message which identifies the reporting server (e.g., via, its IP address or hostname), the controller, the time of the report at the server, the new utilization/willingness state, and a capacity rating (as will be hereinafter described).

A FIFO ordering transport mechanism such as TCP may be used between the servers and controller to ensure that messages are received in order. Each new MON_STATUS message overrides the last reported state for such corresponding server at the controller. However, if the capacity rating is left blank by the server, then no change is recorded by the controller for the capacity of such server. Moreover, if a MON_STATUS message is lost, the system recovers in the manner as follows: if the lost message indicated a change to RED (940) (Figure 9(a)), then any subsequent placement (i.e., a CID_QUERY message) will not pass admission controls at the server. Such events are considered by the server as a violation of the placement agreements between controller(s) and servers. As a result, such RED server will, if necessary, re-issue a RED MON_STATUS message to the controller(s) in question in order to avoid receiving any further CID_QUERY placement messages.

A controller may request, if necessary, resource-monitoring state from a particular server. Via the MON_REQUEST message, the resource monitoring protocol also enables the controller to query the utilization/willingness state, and in addition, determine the true available GREEN capacity of any server when evaluated for the requirements of a particular object identifier. The ability to poll a particular server is useful to the controller when deciding whether to place a new replica of an object on a global server as accomplished by a replica placement process (1400) as described in greater detail hereinbelow.

The demand statistics and data structure (696) illustrated and described above with respect to Figure 11(c), may be further used by the controller to track the reported capacity and utilization/willingness of its servers. As shown in Figure 11(c), the demand statistics and data structure maintains statistics associated with requests for each object identifier including: the predicted demand "d," a demand volume statistic or rate "r," i.e., the request activity for the object replica per time interval, and an indication of whether the requested object is a "hot object" representing a summary of its activity. Optionally associated with an object ID is a dominating geography indicator "g" representing a dominating geographical area associated with object requests. Furthermore, a time-to-live timestamp is associated with each replica. Once the timestamp expires, the global server currently owning the transient replica requests a renewal from its controller (i.e., the controller who placed this replica). At this point, the controller may either drop the replica by denying its renewal or renew it by extending its time-to-live (thus re-populating the database with this new replica). If the controller denies the renewal, then the transient replica may end up being deleted by its global server. A skilled artisan will appreciate that periodical checkpointing of these data structures is desirable for fault tolerance. It should be noted that, in case of a data loss, this data will be reconstructed by having the controller query each individual server via the MON_REQUEST message. For servers for whom a report can not be made available, the corresponding utilization/willingness state is defaulted to RED and its capacity rating left blank until a MON_STATUS message is received from that server. This approach increases the controller's fault tolerance to server failures at the expense of under-utilization of such a server since no new placements will be assigned to such a server until its utilization/willingness state becomes GREEN again.

### Geographical Shaping of Capacity

As mentioned, the controller (520) has several degrees of freedom in matching demand to capacity. First, it controls and shapes the distribution and placement of requests onto servers. Second, it controls and shapes the distribution and placement of replicas across servers according to some set criteria. Last, the controller is capable of dynamically creating, destroying, and moving replicas across servers as deemed necessary by the mechanisms of the present invention in order to achieve its goals.

With regard to the capability of dynamically creating, destroying, and moving replicas across servers, object replicas are enabled to migrate across servers in response to forecasts about predicted demand and available capacity. Consequently, the invention provides a mechanism for regulating the placement of not only requests but, more importantly, replicas throughout the network. This replica management technique may be based on characteristics of predicted request demand and available capacity.

Figure 8 illustrates via an example, the need for a distributed computer system capable of dynamically controlling the placement of replicas onto global servers based on some set criteria such as demand and geography as demonstrated in the preferred embodiment. In this example, there are four geographical partitions (G1, G2, G3, and G4) -- roughly corresponding to the North East (G1), South East (G4), North West (G2), and South West (G3), respectively. A local server (830) is located in the G1 partition. A global server (840) is found in the G4 partition. The system comprises another two global servers (850, 860). The global server (850) provides coverage for the G2 partition whereas the global server (860) provides coverage for the G3 partition. The system comprises a collection of distributed objects. In this case, the collection consists of three different objects (O1, O2, O3). Each of these objects is associated with replicas which may be found throughout the system, i.e., in both global and local servers. In the present invention, replicas found in a local server are referred to as persistent replicas whereas replicas found in a global server are referred to as transient replicas. For each object in the distributed collection, zero or more transient replicas may exist throughout the system.

In the example depicted in Figure 8, there are three persistent replicas, object O1 (820), object O2 (800), and object O3 (810). All these replicas are found in the G1 local server (820). On the other hand, object O1 has one transient replica (801) found on the G4 global server (840) whereas object O2 has two transient replicas (811, 812) found on the G4 (840) and G3 (860) global servers, respectively. Object O3 represents an object for which enough capacity is provided via its persistent replica (810) via the G1 local server. Consequently, no transient replicas of object O3 are (currently) found in the system. Moreover, in this example, object O2 represents an object predicted to be in high demand, i.e., a hot object. This example assumes that analysis of past history indicated that a significant number of requests for object O2 originated from the G3 geography partition meaning that object O2 has an associated "dominating geography." Based on the dominating geography and demand statistics associated with the object O2, the system determines that placing a replica on the G3 partition is desirable. Hence, a transient replica (812) of object O2 was temporarily placed on the G3 global server (860).

Transient replicas have a dynamic lifetime determined by the controller. The lifetime of a transient replica depends, for example, on the demand against available capacity associated with its corresponding object as well as on the expected session duration of its object. For example, an aggressive deadline of, 2 hours could be used for a typical 90 minutes movie for which 30 minutes are allotted for both user interactions as well as lingering time for a deadline renewals from the controller. Clearly, a less aggressive deadline could be used (e.g., a 24 hour deadline for a 90 minute movie). Such strategy may be used when an object is expected to be in demand for such time but its demand may not be sufficiently large to guarantee it to be hot for such duration of time. Furthermore, the aforementioned time-to-live deadline of a replica may be re-set every time a new request is placed onto a transient replica.

As shown in Figure 8, transient replicas reside on global servers (840, 850, 860) which provide storage and streaming resources for the dynamic set of replicas such as (801, 811, 812) associated with a collection of objects such as (800, 810, 820). In this example, transient replicas (801, 811) for object O1 (800) are found on global server (840) whereas a transient replica (812) for object O2 (810) is found on global server (860) and no transient replicas exist for object O3 (820). Furthermore, in the example depicted in Figure 8, a third global server (850) is shown to be available but without any transient replicas. The controller is enabled to manage the dynamic placement of replicas onto global servers in response to some set criteria such as cost, demand, and capacity.

Figure 10 illustrates in further detail the modeling of any server found in Figure 8 (such as server (830) or (840)). As stated before, a server provides both storage and/or streaming resources for these objects. However, the server (1000) is now divided into two independent partitions: a local partition (1010) and a global partition (1020). Both partitions provide independent storage and/or streaming resources for the objects on their collections (1011) and (1021). These collections (1011, 1021) are independently managed. However, whereas the local partition (1010) has a closed membership collection (1011), the global partition (1020) has an open membership collection (1021). As stated before, for a global partition, the membership is managed by the controller, whereas for a local partition, the membership is managed locally by the server. It should be understood that a server may be dedicated to only one partition (i.e., 100% to one and 0% to the other).

According to the preferred embodiment, a distributed system may comprise two separate types of servers: collections of (100%) local servers and collections of (100%) global serves. Thus, further to the embodiment of the server described herein with respect to Figure 2, each partition (1010, 1020) in Figure 10 comprises five software modules or processes, as now described.

The service logic (same as found in Figure 2) provides application-oriented functions on the server. Examples of this application-oriented functionality are the billing and handling of client interactivity for any streaming session. The streaming process (275) provides the network streaming capability to deliver multimedia content from server to client. This functionality is typically performed in accordance to some standard protocol such as RTSP. An admission control process (1040) performs typical admission control tasks which are applied over queries from the controller. The admission control process (1040) evaluates a request and produces an admission offer to the controller (referred to as a candidate placement by the controller). The resource management process (1050) provides enhanced resource monitoring that enables the controller to determine aggregation oriented attributes about servers such as its utilization/willingness state of a server as well as its capacity. A resource management protocol (671) specifies the signaling (i.e., MON_STATUS, MON_REQUEST) messages that are used to monitor and query the state of a server. Last, the replication management process (1030) represents a new process added into the server to enable the creation and deletion of transient replicas on global servers. A replication management protocol described herein provides the signaling requirements that makes on-demand replication of objects possible. Each of the signaling interfaces (1031, 1041, 1051, 1061) enable a server to comply with the corresponding placement management, resource monitoring, streaming, and replica management processes on the controller.

As described, the collection of objects on a global server has an open membership. Objects may enter the collection based, for example, on factors such as predicted demand for a particular object. Similarly, objects may leave the collection based, for example, on factors such as the relative utilization or revenue for a particular object when compared to other objects in the collection. Management of this dynamic membership may be autonomously controlled by controllers via a replica management signaling protocol which is used to replicate objects across servers as well as to migrate replicas across global servers.

For example, a maximum number of transient replicas N may be implemented for any given object. This number may be determined a-priori or dynamically configured during run-time and each different object may have a different maximum number of transient replicas. Furthermore, the number of transient replicas associated with any given object will vary over time, e.g., may be autonomously increased when demand increases, the object is hot, or capacity is low, or, may be decreased when demand decreases, the object is no longer hot, or capacity is found to be sufficiently high for predicted demand.

With more particularity, the replica management system comprises four processes and a complementary signaling protocol (i.e., the replica management protocol) that operate to implement on-demand replication of objects. The replica management system is responsible for the regulation response of controllers over servers (i.e., the placement of replicas and/or requests) with such regulation response directed toward particular servers based on some set constraint accounting for attributes such as the resource capacity of servers. In particular, the placement of requests and replicas onto the same global server may be focused to satisfy explicit co-allocation constraints as set forth by clients and content authors, respectively.

In the present invention, the interaction between requests (i.e., demand) and replica (i.e., capacity) management systems consists of two demand-to-capacity (i.e., unidirectional) triggers referred to as preliminary scarcity and oversupply checks, respectively. On one hand, the preliminary scarcity check is used by the request management system to request an under capacity audit from the replica management system when demand for a particular object is predicted to increase. On the other hand, the preliminary scarcity check is used by the request management system to request an over capacity audit from the replica management system when demand for a particular object is predicted to decrease. If a preliminary test identifies a possible demand-to-capacity condition, a comprehensive analysis is requested from the replica management system, which could possibly lead, to the creation and/or deletion of replica(s). For this reason, these checks are referred to as preliminary, since their goal is to provide a balance between replica management overhead and aggressiveness.

The capacity shaping mechanism is to be activated according to a number of conditions as described in the present invention. In particular, a preliminary check by the request management system is used to identify a possible scarcity condition (defined there as an undersupply in available capacity given predicted demand). This check is used to trigger the activation of the capacity shaping mechanism and referred to as the replica management system. Similarly, a preliminary check is used to identify a possible oversupply condition (defined therein as an oversupply in available capacity given predicted demand). The check is used to trigger the activation of the capacity shaping mechanism.

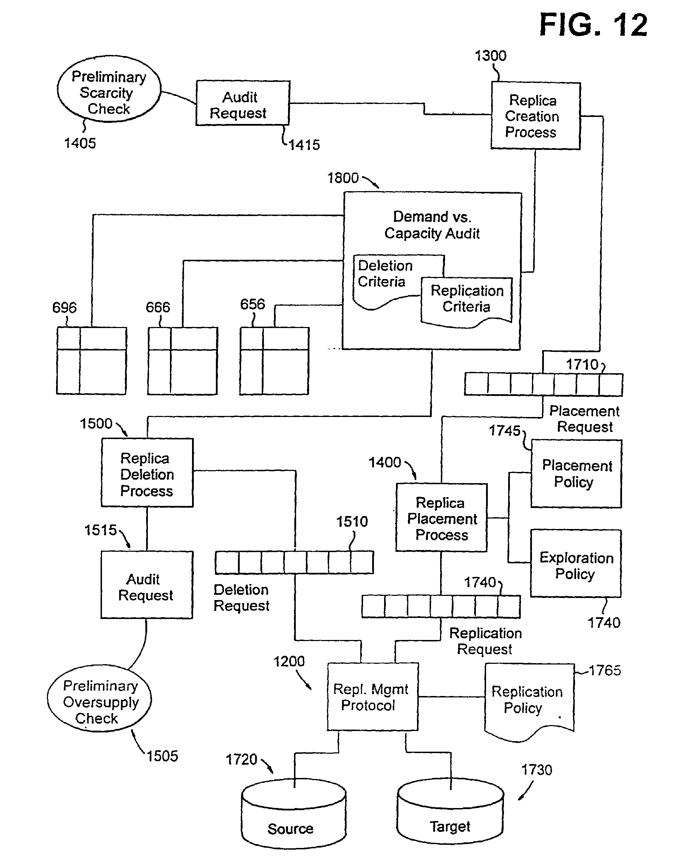

The aforementioned integration of the replica management and request management systems (i.e., demand and capacity shaping) is now described in greater detail herein with respect to Figure 12 which illustrates a high-level diagram depicting the interactions between the various processes of the replica management system as described below.

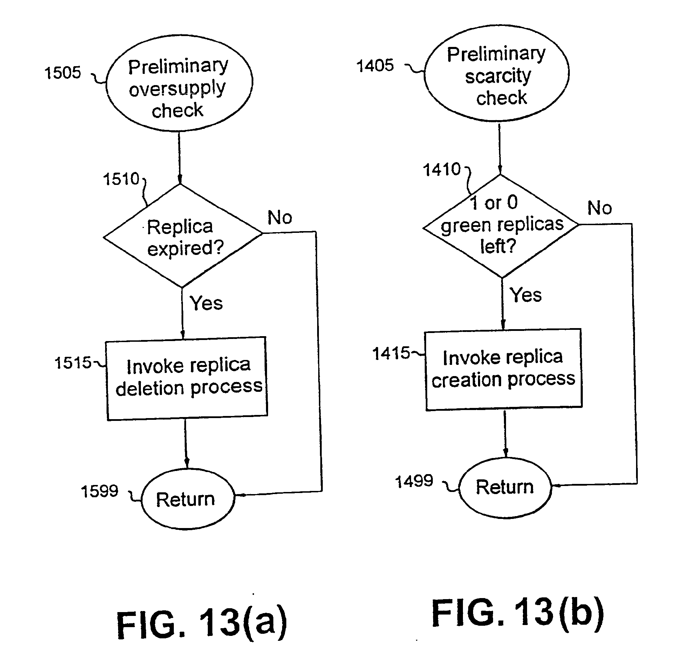

As shown in Figure 12, a preliminary scarcity check (1405) is first performed by the request management system to identify a possible scarcity condition. The preliminary scarcity audits check (1405) takes place after the establishment of a service binding on the request management system. The preliminary scarcity check (1405) as used in the preferred embodiment is depicted in further detail in Figure 13(b).

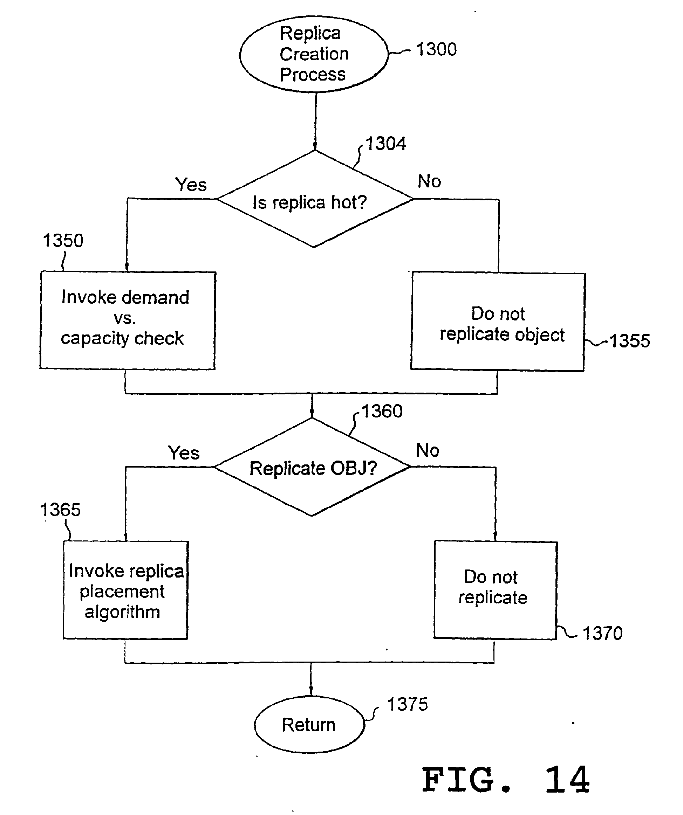

In the preferred embodiment, as illustrated in Figure 13(b), the preliminary scarcity check (1405) determines if less than two GREEN replicas of the requested object are left (1410). A skilled artisan will appreciate that the scarcity check (1405) may be implemented in several different ways with varying degrees of robustness and aggressiveness. For example, preference may be given to a-priori set of selected objects. In such case, the preliminary scarcity check (1405) may be modified to reflect this bias. When a possible scarcity condition is identified, an audit request (1415) is raised to the replica creation process (1300). The audit request (1415) identifies the object (e.g., 420) in question. Its goal is to request a more comprehensive evaluation from the replica creation process (1300) for the specified object. The replica creation process (1300) as used in the preferred embodiment is depicted in further detail in Figure 14. Particularly, the replica creation process (1300) is run only when such an audit request (1415) is raised, otherwise, no audit is triggered (1499). The creation of a replica causes a corresponding update of the replica directory (656).

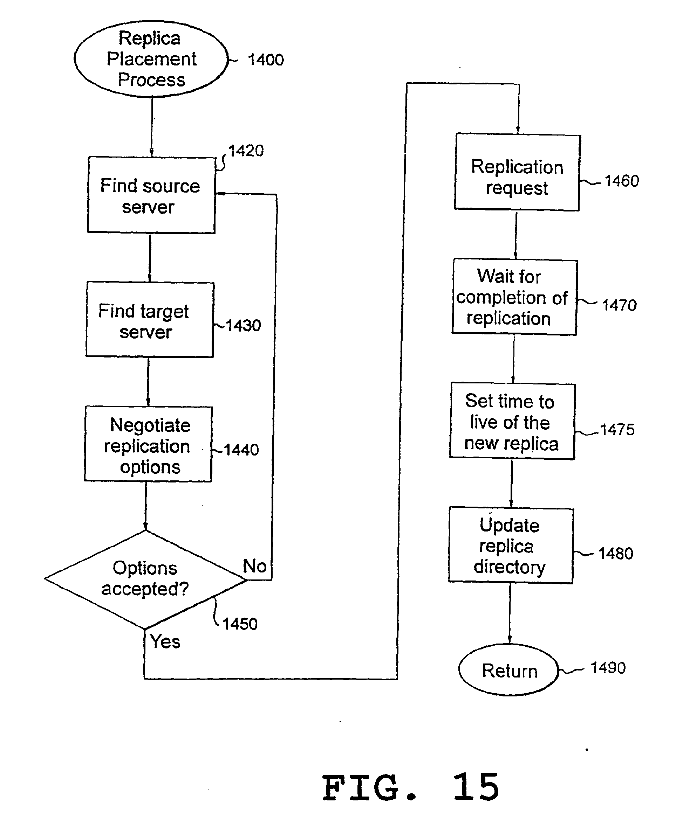

In further view of Figure 12, the goal of the replica creation process (1300) is to determine whether there is a true need for a new replica for the object specified in the audit request (1415) (for example, object O1). If need for a new replica is found, a placement request (1710) is queued to the replica placement process (1400). The replica placement process (1400) as used in the preferred embodiment is depicted in further detail in view of Figure 15. The placement request (1710) indicates that the specified object (e.g., O1) has met the replication criteria and that a replica ought to be made. The replication criteria (1800) as used in the preferred embodiment is depicted in further detail in Figure 15. In particular, the replication criteria implements a demand to capacity assessment which relies on controller-based data structures such as the demand statistics (696), the replica directory (666), and the server directory (656).

The replica placement process (1400) selects a pending placement request (e.g., 1710) and, for such request, it determines the placement of a new replica, if one is possible. A skilled artisan will appreciate that it is possible that several pending placement requests may be queued and a cost metric criteria (Placement policy) (1745) may be used to prioritize the replication of objects when replication resources are low. In the preferred embodiment, a FIFO ordering is used.

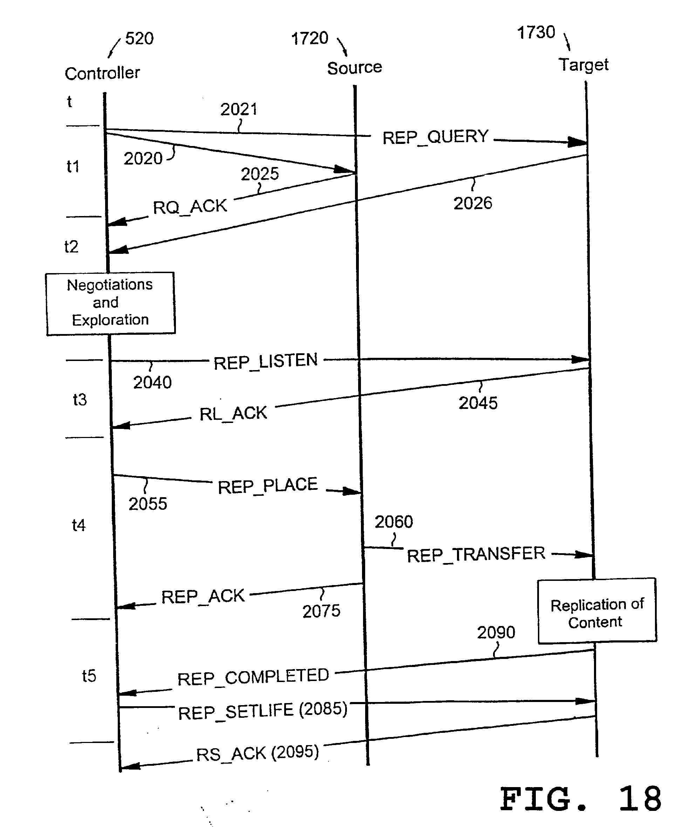

As further shown in Figures 12 and 15, a goal of the replica placement process (1400) is to identify, based on some set criteria (1440), a source server (see 1720) and target server (1730). In the preferred embodiment, the controller explores and negotiates (1440) replication options in a manner similar to the placement of requests as described herewith. This is done by invoking the querying functions provided by the replica management protocol (1200) depicted in Figure 12 and described in greater detail with respect to Figure 18.

Once source (1720) and target (1730) servers are identified, i.e., options accepted at step (1450), the replica management protocol (1200) queues a replication request (1740) for the corresponding placement request (1710). This is done by invoking the replication functions provided by the replica management protocol (1200). A skilled artisan will appreciate that several conditions may arise during replication. In the preferred embodiment, a replication policy (1765) allows the customization of exception handling under the replica management process as described herewith.

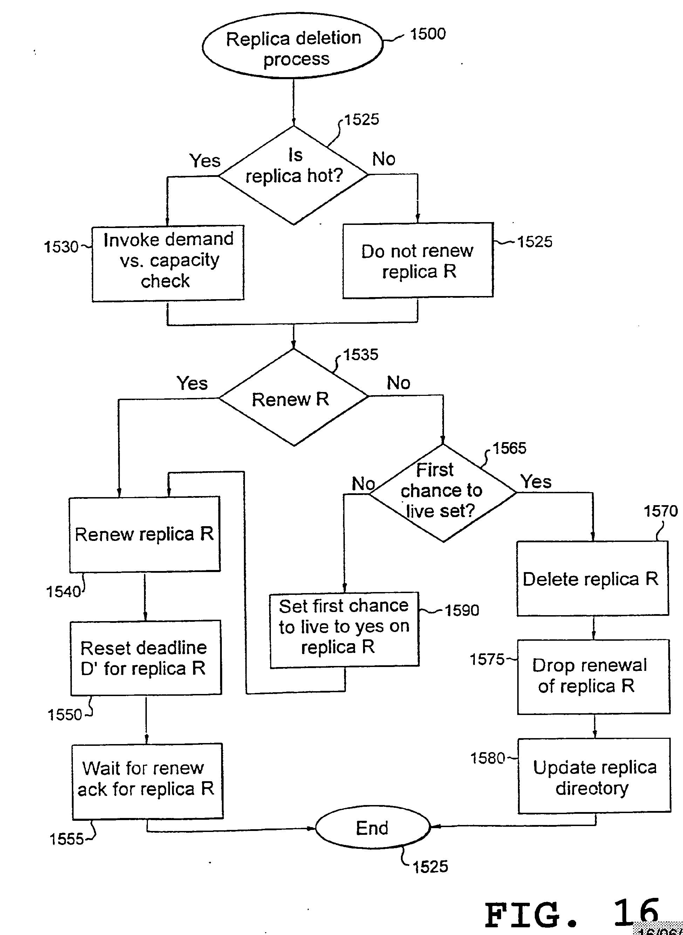

Similarly, the replica management system provides the ability to delete a replica. A preliminary oversupply check (1505) is used by the request management system to identify a possible oversupply condition. The preliminary oversupply check (1505) as used in the preferred embodiment is depicted in further detail in Figure 13(a). The preliminary oversupply audits check (1505) takes place during the termination of a service binding. Moreover, it is also applied whenever a server requests a renewal of a transient replica. When a possible oversupply condition is identified, an audit request (1515) request is raised to the replica deletion process (1500). The replica deletion process (1500) as used in the preferred embodiment is depicted in further detail in Figure 16.

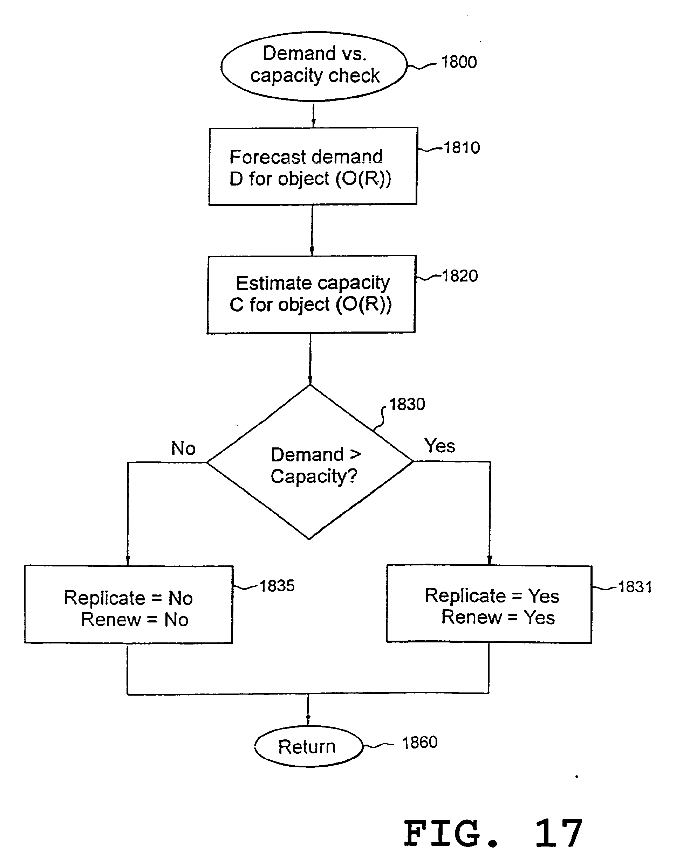

The goal of the replica deletion process (1500) is to determine whether to delete a particular replica based on global demand vs. capacity criteria (1800) for its associated object. In the preferred embodiment, a transient replica is considered a candidate for deletion based on complex criteria based on its time-to-live deadline, demand vs. capacity, and the "hotness" of the object. The deletion criteria (1800) used in the preferred embodiment is depicted in Figure 17. In particular, the deletion criteria implements a demand to capacity assessment.

It should be noted that in the preferred embodiment, deletion and replication criteria are the reciprocal of each other. That is, the condition to renew a replica is the same as to create a new replica the first time around. The replica deletion process (1500) as used in the preferred embodiment is depicted in further detail in Figure 16. If the replica deletion process (1500) finds cause to delete a replica, the replica management system simply denies the renewal of a replica (i.e., the renewal of the replica's time-to-live deadline). The deletion of a replica causes a corresponding update of the replica directory (656).

Figure 14 is a flow-chart depiction of the replica creation process (1300). As mentioned, the goal of the replica creation process (1300) is to determine whether a new replica needs to be created for the requested object. When an audit request (1415)(Figure 12) is received at step (1300), the replica creation process determines whether the requested object is a member of the set of hot objects (1304). If the object is hot, a comprehensive scarcity check is requested at step (1350). This check is referred to as a demand vs. capacity check and it is depicted in detail in Figure 17. On the other hand, if a replica is not a member of the set of hot objects (1355), the controller decides it is not yet time for replication (1360, 1370) and no replica is thus created (1375). However, at step (1360) it may be determined that the controller create a replica even if the object is not "hot". For example, preference could be given to some selected objects based on some cost criteria, thus allowing preferential replication for objects associated with, for example, a higher cost benefit. Thus, at step (1365) the replica placement algorithm is invoked as depicted in Figure 15.

Figure 17 is a flow chart depicting a process (1800) for checking the demand vs. capacity. According to step (1830), a determination is made as to whether the predicted demand (determined at step 1810) for a particular object (O(R)) exceeds available capacity (determined at step 1820). At step (1830), if the predicted demand is greater than available capacity, the controller considers the requested (hot) object as a replication candidate as indicated at step (1831). In such a case, the requested object is placed in a replication queue and the replica placement process (1400) is then invoked (as shown in Figure 15). On the other hand, if predicted demand is less than available capacity, the controller decides it is not yet time for replication as indicated at step (1835).

It should be noted that the scarcity of GREEN replicas (1415 as shown in Figure 13(b)) is just a trigger used to throttle the replica creation process (1300). The actual decision to create a new replica is examined at step (1830) and made on (1831) only when predicted demand (1810) significantly exceeds available capacity (1820) as illustrated in Figure 17. As stated before, a smoothed demand statistic is used to robustly forecast predicted demand for each object. On the other hand, the server utilization/willingness state (990) (e.g., Figure 6(b)) and its server capacity rating are used to loosely forecast server capacity (for example, the number of GREEN servers left). It should be noted that the MON_REQUEST message may also be used to query a GREEN server for a robust estimate of its remaining capacity. To the controller, such estimate would be useful only if it is translated to the particular requirements of the object for which a replica evaluation is being made. This would produce the number of further placements that such server would be able to provision if reserved exclusively for this object. In the preferred embodiment of Figure 17, if this number (1820) is less than the predicted demand (1810) associated with the requested object, a decision to create a new replica is made (1831).

After the replica creation process determines a new replica is needed for a given object, the replica placement process (1400) described with respect to Figure 15, is invoked to determine whether a placement for this replica may be found.

Figure 15 is a flowchart illustrating the replica placement process (1400) implemented for finding a target global server as indicated at step (1430) based on factors such as capacity. In addition to finding a target server, the replica placement process (1400) also attempts to find a source server as indicated at step (1420) from which to initiate the replication. To this end, the controller engages in an exploration and negotiation process, as indicated at step (1440) of candidate source and target servers. Preferably, the exploration and negotiation may be iterative in nature with the process returning to step (1420) to find new source and target servers if options are not accepted as indicated at step (1450). This exploration and negotiation is accomplished via the use of a query functions (REP_QUERY/RQ_ACK messages) provided by the replica management protocol as illustrated by way of example in view of Figure 18. For example, during the exploration of source (1420) and target (1430) servers, the replica placement process (1400) negotiates replication options (1440) such as, for example, determining the streaming rate at which to replicate (and its corresponding bandwidth requirement). It should be understood that the replicated object may be transformed during replication. For example, the object to be replicated may be downgraded to a lesser quality during the negotiation of options step (1440) shown in Figure 15. Similarly, the object may be encoded into a different format or may be augmented with content related or not related to the original content of the object.

Having agreed to a replication option, the process proceeds to step (1460) where a replication request is made. Preferably, the replication request (1460) is placed onto a GREEN global server that currently does not hold another replica of the selected object. If more than one such GREEN global servers exists, then according to the preferred embodiment, preference is given to the nearest global server based on some cost criteria such as the available capacity associated with the object being requested.

It should be noted that in the preferred embodiment, the preliminary scarcity criteria (Figure 13(b)) would result that, in most cases, either zero or one GREEN replica (i.e., potential source servers) is left. Moreover, it is possible that no remaining GREEN target servers will be found. Furthermore, it should be noted that in the preferred embodiment, the replica placement process does not explicitly reserve resources on either source nor target server. For these reasons, the preferred embodiment of the invention relies on the privileged use of the remaining YELLOW/RED capacity of any such server (source or target). The replica placement process (1400) relies on the use of the out-of-bounds, over-engineered capacity of a server (i.e., YELLOW/GREEN capacity) to place the replication request (1460). That is, the replica placement process (1400) is allowed to place a replication request (1460) onto any capable YELLOW server if no GREEN server is found available for the selected object. To do so, it is necessary that admission controls (1040) at a server be enhanced to differentiate between replication placements and request placements. Alternately, if no remaining GREEN replica is available, the replica placement process may queue the replication request (1460) until once such GREEN replica becomes available.

Returning to Figure 15, after source and target servers are chosen, a replication request is placed to both servers as indicated at step (1460). The signaling needed for the handling of such a replication request is illustrated in further detail in Figure 18 by way of example. At step (1470), the controller waits for a positive acknowledgment from the selected target server that the replication has been completed. Then, at step (1475), an expiration deadline is assigned to the replica, herein referred to as the replica's time-to-live deadline, which imposes a (renewable) bound on the lifetime of a transient replica on a global server. Next, at step (1480), the controller updates its replica directory (656). After this, the new replica is made available (1490) for future placements.

Depending on the negotiated options (step 1440), replication may be time consuming. Thus, according to the invention, requests placed during the replication may be: deferred (in time), handed-off (to another controller), or refused by the controller depending on some set criteria.

A skilled artisan will appreciate that during this time, it is possible for the reported utilization/willingness state of servers to change. On one hand, it is possible that while a transient replica is being created (1470), one or more servers become available (i.e., GREEN) causing capacity to exceed demand. In this case, the time-to-live of the newly created replica then will determine the duration of the oversupply. That is, as mentioned, the replication mechanism assigns an expiration deadline to every replica it creates. When the expiration deadline for a replica expires, its global server requests a renewal of the replica's expiration deadline. If this effort is unsuccessful, the replica may be deleted from the global server causing its resources to become available. On the other hand, it is also possible that by the time that the new replica becomes available, no available capacity is left (i.e., no GREEN servers are found) causing demand to significantly exceed capacity. In such case, the placements made during scarcity would trigger additional replica creation audits. For this reason, it is necessary to limit the maximum number of replicas to be created for any particular object. A skilled artisan will appreciate that the new audit requests may be queued for a pre-determined amount of time. Then, after such time, the preliminary scarcity condition is re-checked to determine if it is persistent (i.e., during the queuing time no GREEN replicas became available). Clearly, if this amount of time were too long, then requests for this object may be dropped or handed-off to another controller.

Figure 18 illustrates one embodiment of the replica management protocol (1200) for enabling the controller (520) to create and delete transient replicas on global servers. Once the controller determines need and placement for a new replica, the controller proceeds to find a source server (e.g., 1720) and then negotiates a replication connection with one or more such servers. This is shown as the REP_QUERY (2020)/ RQ_ACK (2025) message exchange. The REP_QUERY (2020) message contains the object identifier of the object to replicate along with negotiation parameters.

When a server (e.g., 1720) receives the REP_QUERY message (2020), it applies admission control and determines whether to accept the replication connection. A reader versed in the arts would appreciate that the REP_QUERY message (2020) is functionally very similar to the CID_QUERY message. However, as stated before, it is necessary to differentiate between placement and replication queries to be able to provide privileged admission controls (i.e., YELLOW admissions) to replication requests. After applying privileged admission controls to the replication request (2020), each potential source server (e.g., 1720) relays its admission response to the controller via the RQ_ACK message (2025). It should be noted that each such server response (2025) may indicate: (i) acceptance of the negotiation parameters provided on the REP_QUERY message (2020) by the controller (520), (ii) negotiate, or (iii) reject the negotiation parameters provided on the REP_QUERY message (2020) by the controller (520).

During this time, the controller also explores the set of feasible target servers as described before (see 1730) via the use of another REP_QUERY (2021)/ RQ_ACK (2026) message exchange. Each potential target server (e.g., 2010) applies privileged admission controls (as described above) to the replication query REP_QUERY (e.g., 2021) and relays its admission decision to the controller (2000) via the RQ_ACK message (2026).

In a manner similar to the placement of CID_QUERY messages, the controller (520) collects RQ_ACK messages (e.g., 2025 and 2026) from source and target servers and then chooses between candidate replication placements. Similarly, if no candidate replication placements are received, the controller resorts to further exploration according to its replication policy (see 1765) (Figure 12).

Next, once the controller (520) chooses source and target servers, a REP_LISTEN message (2040) is sent to the target server (1730). The REP_LISTEN message identifies the object to be replicated (e.g., object O1), the source server (e.g., 1720), and the target server (1730). In addition, the REP_LISTEN message (2040) contains the replica's time-to-live deadline as determined by the controller. As previously mentioned, the time-to-live deadline is used to determine the lifetime of a transient replica on the server and enable the deletion of content no longer in use. The REP_LISTEN message (2040) causes the global server (2010) to wait and listen for a replication connection from the server identified (e.g., 1720) in the REP_LISTEN message (2040). The target server sets up the resources for this replication connection and then acknowledges readiness to the controller (520) via the RL_ACK message (2045).

After the target server (1730) acknowledges readiness via the RL_ACK message (2045), the controller (520) issues a REP_PLACE message (2055) to the selected source server (2005). The REP_PLACE message (2055) identifies the object to be replicated, the source server (1720), and the target server (1730). The REP_PLACE message (2055) instructs the source server to initiate a replication connection to the target global server. The source server (1720) schedules and sets ups a replication connection to the target server (1730).

After the source server (1720) sets ups its replication connection, the source server acknowledges the start of the replication connection to the controller (520) via the RP_ACK message (2075). At the same time, the replication of content is initiated at the previously negotiated parameters via the use of one or more REP_TRANSFER messages (2060). Each REP_TRANSFER message (2060) contains data necessary to reconstruct the fragmented content at the target server (e.g., sequence number, number of bytes, etc.).

After the content is replicated, the target server (1730) announces the creation of a new replica to the controller (520) via the REP_COMPLETED message (2090). The REP_COMPLETED message contains the object identifier of the replicated object. A REP_SETLIFE message (2085) is used by the controller to relay the renewal and its associated new deadline to the global server holding the transient replica. The controller waits (1555) until the global server in question acknowledges the renewal via the RS_ACK message (2095). The controller then updates (1480) its replica management directory (656) for future reliance on this newly created transient replica at global server (1730) on subsequent placements.

It should be noted that the creation of the new transient replica does not reserve resources at a global server. Instead, on-demand replication is used to increase the likelihood of finding available capacity during subsequent requests for the same object.

As replicas are not permanent but are rather associated with a time-to-live deadline, the replication mechanism assigns an expiration deadline to every replica it creates. When the expiration deadline for a replica expires, its global server requests a renewal of the replica's expiration deadline. If this effort is unsuccessful, the replica may be deleted from the global server causing its resources to become available.

According to the preferred embodiment, the replica management system trims capacity during sustained and significant decrease in demand for an object. In the present invention, the replica management system autonomously determines whether a replica ought to be deleted. In particular, every time that a service binding is terminated, the server associated with the service binding sends a CID_COMPLETED message to the controller. Among other things, the CID_COMPLETED message causes the controller to apply a preliminary oversupply check to this particular replica. In addition, the preliminary oversupply check (1505) (Figure 13(a)) is also triggered by a server whenever the renewal of a replica is requested.

Preferably, oversupply checks are performed to determine if, for a particular object, available capacity significantly exceeds predicted demand. In particular, the preferred embodiment recognizes various symptoms of oversupply such as, but not limited to: low utilization across one or more replicas, the existence of replicas for objects found not to be hot, and the expiration of a replica' s time to live deadline. Thus, a skilled artisan will appreciate the interaction between the maximum number of hot objects and the lifetime of transient replicas. If the lifetime of a transient replica is chosen to be too large, replicas of possibly no longer hot objects may reside in global servers while replicas of currently newly hot objects may be awaiting an available GREEN global server.

The preliminary oversupply check (1505) used by the preferred embodiment is shown in Figure 13(a). A transient replica is audited for deletion if its time-to-live deadline is found to be expired (1510). In such case, the replica deletion process (1500) is invoked at step (1515) to perform a more comprehensive analysis. Otherwise, no action is taken (1599).

Figure 16 illustrates the flowchart of the replica deletion process (1500) for determining whether an audited replica ought to be deleted. Conversely, the replica deletion process (1500) also determines whether a replica ought to be renewed (1535). The replica deletion process (1500) first checks whether the replica is associated with a hot object (1525). At this point, the controller could either delete the replica by denying its renewal or renew it by extending its time-to-live. On one hand, if the replica is hot, a comprehensive demand vs. capacity check is invoked (1530) as described herein with respect to Figure 17. On the other hand, if the replica is not hot (1525) or found to be in oversupply during the demand vs. capacity check (1530), the replica is considered a candidate for deletion.

In accordance to best current practices, actual deletion may be deferred (1565) until such replica is found to be a deletion candidate twice in a row (1570). A skilled artisan will recognize this practice as an instance of a second chance replacement algorithm as described in the reference "Operating Systems Concepts", Prentice Hall, Peterson and Silberschatz. If this is the first chance to live (1590) of this particular replica, the replica is then tentatively renewed (1540). A skilled artisan will appreciate that the second time-to-live deadline (1550) may be made smaller than the original one. A REP_SETLIFE message (2085) (Figure 18) is used to relay the renewal and its associated new deadline to the global server holding the transient replica. The controller waits (1555) until the global server in question acknowledges the renewal via the RS_ACK message (2095) (Figure 18). If a second chance to live have been given to the replica, the replica is to be deleted at step (1570) (Figure 16). The controller then drops the renewal (1575) of the replica causing the global server to delete the replica. Once the decision to delete a replica is reached (1570), the replica directory is updated (1580), so subsequent placements would make use of this replica. It should be noted that in some implementations, the replica data structures need to be protected since multiple threads or processes would access them.

A skilled artisan will appreciate that other mechanisms may be used to shape capacity in a different way as opposed to one replica at a time. In particular, the shaping of capacity represents an adaptive rate control problem, and, as such, current best practices suggest the use of an asymmetrical compensation strategy. For example, a multiplicative increase (e.g., first time create one replica, second time create two replicas, third time create four replicas, and so on) coupled with a linear decrease (e.g., first time delete one replica, second time delete one replica, and so on) could be used. It is also possible to match the compensation effort (i.e., the number of replicas to create) to the increase in demand. In such an approach, the number of replicas to create is determined based on the difference between past and forecast demand such as described in Manohar, N, et al, "Applying Statistical Process Control to the Adaptive Rate Control Problem", Proc of SPIE MMCN '98, January 1998. Regardless, it is clear that a bound on the maximum number of replicas is desirable so as to bound the replication effort.

Furthermore, distributed implementations of the preferred embodiments of the demand and capacity shaping mechanisms are possible. For example, in one implementation, controller functionality may reside on each server. The delegate controller then performs demand and capacity monitoring tasks for the server and when critical thresholds are exceeded, the controller starts relying on the use of a global server. In particular, the same global server could be used across different controllers.

A reader versed in the arts will also appreciate that the particular implementation of the trigger controls described herein may be optimized for particular environments where demand and geographical patterns are known or could be robustly predicted.

There are many useful applications of the present invention. For example, as mentioned, the system and method of the present invention may be used as a value-added service by a Internet Service Provider (ISP) supporting a broadcast content providers such as a cable television network, for illustrative purposes, to dynamically match demand to capacity of that cable network's servers. When necessary, the ISP places transient replicas (of the cable network content) on its own global servers based on characteristics about the demand for that content as presented to the ISP. Several such variations are discussed herewith.

For example, the present invention could be used as well to provide statistical sharing of ISP resources (i.e., globally-shared servers) when supporting multiple broadcast content providers. This way, the ISP controller would then manage the allocation of replication requests according to some cost metric such as profit or content provider maximum loss protecting most likely, the best interest of the ISP.

In an implementation of particular interest, each independent content provider runs a server referred to as a delegate controller behind its firewall. The delegate controller performs demand and capacity monitoring tasks for the content provider and when critical thresholds are exceeded, the delegate controller places a replication request to the ISP's controller. The ISP controller then arbitrates between pending replication requests and determines which replication requests get allocated to which global servers. In particular, the same global server could be shared across different delegate controllers.

A skilled artisan may appreciate that content providers, for security reasons, may not be willing to disclose nor allow another party to access its internal usage statistics. For this reason, it is envisioned that content providers should be allowed to directly request the placement of a specific replica onto the ISP global servers. Furthermore, such request may be conditioned (by the content provider as opposed by the controller) to meet particular requirements such as geography or capacity of the target global server. The ISP controller would then try to locate one such particular global server satisfying such requirements. For example, a particular content provider could place a replication request such as "get me a replica of the following content within the next 5 minutes and locate such transient replica in a HIGH capacity server in the Southeast of the USA".

Moreover, ISPs may collaborate in agreements that allow an ISP to handoff replication requests to other ISPs having suitable global servers. For example, in the event that none of an ISP's global servers satisfies the requirements associated with a request placed by a content provider, the ISP would then handoff the replication request to some such friendly ISP.

Moreover, an auction for the placement of such replication requests could be implemented by an intermediary party. Such intermediary party would then negotiate the handoff for such replication request to the most capable or suitable party according to some cost metric such as cost or an expiration deadline.

A skilled artisan will appreciate that it is possible for a replica to be placed in a global server, which no longer fits demand characteristics. To this end, the replica migration management may be augmented by performing periodic sanity checks responsible for the stability and fine-tuning the distribution of transient replicas throughout the overall system. The replica migration process performs garbage collection and optimization over the placement and number of transient replicas. The replica migration process is invoked in a manner similar to a garbage collection process. The replica migration process walks through the list of all transient replicas and finds those having low utilization.

The replica migration process may not determine whether it is efficient (based on some cost criteria) to migrate a replica across geography partitions, e.g., the case when the dominating geography of a hot object changes (as for example, when the requests from clients shift from the East Coast to the West Coast). However, replica migration may be used to reduce network costs due to increasing geographic proximity to predicted demand. For example, the movement of an already placed transient replica from one global server onto another may be desirable if overall system capacity is low and analysis of predicted demand identifies a shift in the characteristics of future demand. In particular, whereas past demand may have caused the placement of a transient replica on geography partition G1, predicted demand from geography partition G3 may make it desirable to migrate the transient replica from G1 to G3 (See, Figure 8). Thus, the migration of a replica onto a different global server is then triggered based on a cost metric forecasting a predicted cost benefit when comparing current placement to recommended placement.

The replica migration process relies on various heuristics, such as, for example: transient replicas might be moved from one global server onto another, based on some set criteria. Furthermore, two transient replicas at different global servers may be collapsed (merged) into a replica at a single global server. For instance, it may sometimes be useful to merge two or more transient replicas so as to project their combined placement characteristics (e.g., usage and demographics) onto another server. Furthermore, such decision may be based on some set criteria such as suitability of the global server to demand demographics. For this reason, the present invention refers to replica merging as an additive projection of replica placements.

It may additionally be desirable migrate replicas (transient or not) onto another replica (transient or not), i.e., offload placements from a replica on one server onto another server. For example, this would be desirable so as to open capacity on a particular global server or to collapse sparse usage of transient replicas across multiple servers onto a persistent replica with low utilization.

It should be further understood that replica migration measures require carefully trigger controls with respect to past placement goals in order to avoid instability on the demographics of replicas. A skilled artisan will appreciate that techniques such as online process optimization and neural networks may be used, in addition to or in lieu of the aforementioned techniques, to implement self-regulated controls and to evaluate and control the robustness of the aforementioned migration heuristics.

## Claims

1. A request management system for placing requests for multi-media objects from independent clients onto servers distributed throughout a network having said objects, each server having a capacity for storing multi-media objects and a streaming resource for delivering requested multi-media objects to clients, the system comprising:
intermediary control means (520) comprising:
means (600) for receiving placement inquiries for requests for said multi-media objects from said clients, a requested object having a unique identifier associated therewith;
means (665) for locating object replicas associated with the given object identifier and stored at one or more of said servers;
means (655) for determining a willingness of any such server to consider new requests for said object replicas by analyzing for each such server an indicator associated with a degree of willingness of said each said server, wherein said degree of willingness of a particular server is reported by said particular server and is a function of said particular server's available capacity according to its current utilization as determined by the local resource management of said particular server; and,
means for generating (610) two or more simultaneous placement inquiries to two or more servers according to the indicated degree of willingness and to a predetermined policy, said intermediary control means forwarding said two or more placement inquiries to said two or more willing servers, each said placement inquiry requesting a willing server to accept a request for an object from a client as a candidate admission;
wherein said control means (520) implements a placement policy for generating tentative placements of requests to servers, such that at least one resource of a server associated with a tentative placement is operable to be reserved for an expirable duration,
wherein said intermediary control means (520) selects, from among the candidate admissions, a server to accept a guaranteed admission and return an acknowledgement signal; and wherein
the intermediate control means further comprises:
means for dynamically controlling an amount of object resources available in said network, said dynamically controlling means comprising:
means (680) for predicting a demand for an object resource including means for gathering statistics on geographical areas and means for gathering statistics on demand;
means (690) for estimating available capacity reported by said servers in said network for storing and streaming a requested object resource; and,
means (660) for dynamically generating one or more object replicas of said object resource based on said predicted demand for said object resource and said available capacity and automatically temporarily placing said object replicas at servers throughout said network when demand is predicted to increase and deleting replicas when demand is predicted to decrease, said means (660) for dynamically generating comprising:
means for negotiating a replication connection with one or more potential source servers to provide one or more replicas of said object resource;
means for negotiating a replication connection with one or more potential target servers for receiving said one or more replicas of said object resource;
means to select a source server and a target server among the willing servers identified by the negotiating means; and
means to initiate the replication process in the selected source and target server.

2. The system according to Claim 1, wherein said means (665) for locating object replicas includes first directory service means comprising a mapping (666) of object identifiers to locations of associated object replicas at said servers.

3. The system according to Claim 2, wherein said means (655) for ascertaining the willingness of servers includes second directory service means comprising a mapping (656) of available distributed servers with an indicator indicating degree of willingness of a respective server to receive placement inquiries.

4. The system according to Claim 3, wherein said second directory service enables mapping of distributed servers with an available capacity rating indicator (657) for indicating amount of resources available at said server.

5. The system according to Claim 4, wherein said control means is operable to access said first and second directory services for determining said tentative placements.

6. The system according to any preceding claim, wherein said control means (520) further comprises means for monitoring a number of received requests during bounded time intervals, and aggregating said requests into groups of requests based on one or more predetermined criteria.

7. The system according to any of the preceding claims, wherein the means for dynamically controlling comprise means for signaling deletion (1510) requests for content to selected source (1720) and target (1730) servers.

8. A method for shaping demand for multi-media objects stored at one or more servers distributed throughout a network, each server device having a capacity for storing multi-media objects and, a streaming resource for delivering requested multi-media objects to clients, the method comprising:
receiving requests for said multi-media objects from independent clients,
each requested object having a unique identifier associated therewith;
locating object replicas associated with the requested object identifier that are stored at one or more of said servers;
determining a willingness of any such server to consider a placement inquiry associated with said request for said object replicas by analyzing an indicator associated with a degree of willingness of each said server to consider new requests, wherein said degree of willingness of a particular server is a function of said particular server's available capacity and is reported by said particular server according to its current utilization as determined by the local resource management of said particular server;
generating two or more placement inquiries for said object to two or more willing server according to the indicated degree of willingness and a pre-determined policy, and simultaneously forwarding a placement inquiry to said two or more willing servers, each said placement inquiry requesting a corresponding willing server to accept of a request for an object from a client as a candidate admission;
implementing a placement policy for generating one or more tentative placements of requests to servers, such that at least one resource of a server associated with a tentative placement is operable to be reserved for an expirable duration and selecting, from among the candidate admissions, a server to accept a guaranteed admission and return an acknowledgement signal; the method further comprising:
dynamically controlling an amount of object resources at servers in said network, said dynamic controlling step comprising the steps of:
predicting a demand for an object resource, including gathering statistics on geographical areas and statistics on demand;
estimating available capacity reported by said servers in said network, said capacity including capability of storing object resources and streaming objects to a client;
replicating said object resource when said predicted demand for said object resource exceeds said available capacity and temporarily placing said object replica at a server located in said network, said step of replicating comprising:
negotiating (2020) a replication connection with one or more potential source servers to provide a replica of said object resource;
negotiating (2021) a replication connection with one or more potential target servers for receiving said replica of said object resource;
selecting (2055) a source server and a target server among the willing servers identified by the negotiating means; and
initiating the replication process in the selected source and target server; and
deleting object replicas that have been temporarily placed when predicted demand for said object resource decreases.

9. The method according to claim 8, further comprising the steps of:
monitoring a number of received requests during bounded time intervals, and
aggregating said requests into groups of requests based on one or more predetermined criteria.

10. A program storage device readable by a machine, tangibly embodying a program of instructions executable by the machine to perform method steps of any of claims 8 and 9.

## Patentansprüche

1. Anforderungs-Management-System zum Stellen von Anforderungen auf Multimedia-Objekte von unabhängigen Klienten an Server, die innerhalb eines Netzwerks verteilt sind, das die Objekte aufweist, wobei jeder Server eine Kapazität zum Speichern von Multimedia-Objekten aufweist und eine Streaming-Einrichtung zum Liefern der angeforderten Multimedia-Objekte an Klienten, wobei das System enthält:
zwischengeschaltete Steuermittel (520), die enthalten:
Mittel (600) zum Empfangen von Platzierungs-Anfragen nach Anforderungen für die Multimedia-Objekte von den Klienten, wobei ein angefordertes Objekt einen zugeordneten eindeutigen Identifizierer aufweist;
Mittel (665) zum Lokalisieren von Objekt-Kopien, die dem gegebenen Objekt-Identifizierer zugeordnet sind und in einem oder mehreren der Server gespeichert sind;
Mittel (655) zum Bestimmen einer Bereitschaft irgendeines derartigen Servers, neue Anforderungen für die Objekt-Kopien in Betracht zu ziehen, indem für jeden derartigen Server ein Indikator untersucht wird, der einem Grad der Bereitschaft jedes Servers zugeordnet ist, wobei der Grad von Bereitschaft eines bestimmten Servers von dem bestimmten Server berichtet wird und eine Funktion ist der verfügbaren Kapazität des bestimmten Servers gemäß seinem aktuellen Nutzungsgrad, wie er von dem lokalen Ressourcen-Management des bestimmten Servers bestimmt ist; und,
Mittel zur Erzeugung (610) von zwei oder mehreren gleichzeitigen Platzierungs-Anfragen an zwei oder mehr Server gemäß dem angezeigten Grad der Bereitschaft und einer vorbestimmten Verfahrensweise, wobei das zwischengeschaltete Steuermittel die zwei oder mehreren Platzierungs-Anfragen an die zwei oder mehreren bereitwilligen Server weitergeben, wobei jede der Platzierungs-Anfragen einen bereitwilligen Server auffordert, eine Anforderung für ein Objekt von einem Klienten als einen Kandidaten für eine Zulassung zu akzeptieren;
worin das genannte Steuermittel (520) eine Platzierungs-Verfahrensweise implementiert, um probeweise Platzierungen von Anforderungen an Server zu erzeugen, so dass mindestens eine Ressource eines Servers, die einer probeweisen Platzierung zugeordnet ist, betriebsbereit ist, um für eine begrenzte Dauer reserviert zu werden,
wobei das zwischengeschaltete Steuermittel (520) aus den probeweisen Zulassungen einen Server aussucht, um eine garantierte Zulassung zu akzeptieren und ein Bestätigungssignal zurückzugeben; und wobei
das zwischengeschaltete Steuermittel weiter umfasst:
Mittel zum dynamischen Steuern einer Menge von Objektressourcen, die in dem Netzwerk verfügbar sind, wobei das dynamische Steuermittel enthält:
Mittel (680) zur Vorhersage eines Bedarfs für eine Objektressource, einschließlich Mittel zum Sammeln von Statistiken über geographische Bereiche und Mittel zum Sammeln von Statistiken über den Bedarf;
Mittel (690) zum Abschätzen der verfügbaren Kapazität, die von den Servern im Netzwerk gemeldet werden, zum Speichern und Streamen einer angeforderten Objekt-Ressource; und,
Mittel (660) zum dynamischen Erzeugen einer oder mehrerer Objekt-Kopien der Objekt-Ressource, basierend auf dem vorhergesagten Bedarf an dieser Objekt-Ressource und der verfügbaren Kapazität und automatisches zeitweises Platzieren der Objekt-Kopien auf Server im gesamten Netzwerk, wenn der Bedarf als zunehmend vorhergesagt ist, und Löschen von Kopien, wenn der Bedarf als abnehmen vorhergesagt ist, wobei die Mittel (66) zum dynamischen Erzeugen enthalten:
Mittel zum Verhandeln einer Kopie-Verbindung mit einem oder mehreren potentiellen Quellservern, um eine oder mehrere Kopien der Objekt-Ressource zur Verfügung zu stellen;
Mittel zum Verhandeln einer Kopie-Verbindung mit einem oder mehreren potentiellen Ziel-Servern zum Empfangen der einen oder mehreren Kopien der Objekt-Ressource;
Mittel zum Auswählen eines Quell-Servers und eines Ziel-Servers unter den bereitwilligen Servern, die von den Verhandlungsmitteln identifiziert wurden; und
Mittel zum Initiieren des Replizierungsprozesses in dem ausgewählten Quell- und Ziel-Server.

2. System nach Anspruch 1, wobei die Mittel (665) zum Lokalisieren von Objekt-Kopien erste Verzeichnisdienst-Mittel aufweisen, enthaltend eine Abbildung (666) von Objekt-Identifizierern auf Lokationen zugeordneter Objekt-Kopien auf den Servern.

3. System nach Anspruch 2, worin die Mittel (655) zur Sicherstellung der Bereitschaft von Servern zweite Verzeichnisdienst-Mittel aufweisen, enthaltend eine Abbildung (656) von verfügbaren verteilten Servern mit einem Indikator, der den Grad der Bereitwilligkeit eines jeweiligen Servers anzeigt, Platzierungs-Anfragen zu empfangen.

4. System nach Anspruch 3, worin der zweite Verzeichnisdienst die Abbildung von verteilten Servern ermöglicht mit einen Indikator (657) zur Anzeige einer verfügbaren Kapazität, um die Menge von Ressourcen anzuzeigen, die in dem Server verfügbar sind.

5. System gemäß Anspruch 4, worin das Steuermittel betrieben werden kann, um zum ersten und zweiten Verwaltungsdienst zuzugreifen, um die probeweisen Platzierungen zu bestimmen.

6. System nach irgendeinem der vorstehenden Ansprüche, worin das Steuermittel (520) weiter Mittel enthält, um eine Anzahl von empfangenen Anforderungen in begrenzten Zeitintervallen zu überwachen und die Anforderungen in Gruppen von Anforderungen zusammen zu führen, auf der Basis von einem oder mehreren vorbestimmten Kriterien.

7. System nach irgendeinem der vorstehenden Ansprüche, worin das Mittel zum dynamischen Steuern Mittel enthält, um Anforderungen zum Löschen (1510) von Inhalten an ausgewählte Quell-Server (620) und Ziel-Server (1730) zu signalisieren.

8. Verfahren zur Ausgestaltung des Bedarfs an Multimedia-Objekten, die in einem oder mehreren Servern gespeichert sind, die über ein Netzwerk verteilt sind, wobei jeder Server eine Kapazität zum Speichern von Multimedia-Objekten aufweist und Streaming-Mittel zur Lieferung der angeforderten Multimedia-Objekte an Klienten, wobei das Verfahren enthält:
Empfangen von Anforderungen für die Multimedia-Objekte von unabhängigen Klienten, wobei jedem angeforderten Objekt ein eindeutiger Identifizierer zugeordnet ist;
Lokalisieren von Objekt-Kopien, die dem angeforderten Objekt-Identifizierer zugeordnet sind und in einem oder mehreren Servern gespeichert sind;
Bestimmen einer Bereitschaft jedes der Server, eine Platzierungs-Anfrage zu berücksichtigen, die mit der Anforderung für die Objekt-Kopien verbunden ist, indem ein Indikator untersucht wird, der einem Grad der Bereitschaft eines jeden Servers zugeordnet ist, neue Anforderungen zu berücksichtigen, wobei der Grad der Bereitschaft eines bestimmten Servers eine Funktion der verfügbaren Kapazität des bestimmten Servers ist und von dem bestimmten Server entsprechend seinem aktuellen Nutzungsgrad berichtet wird, der von dem lokalen Ressourcenmanagement des bestimmtem Servers bestimmt ist;
Erzeugen von zwei oder mehreren Platzierungs-Anfragen für das Objekt an zwei oder mehrere bereitwillige Server, entsprechend dem angezeigten Grad der Bereitschaft und einer vorbestimmten Verfahrensweise, und gleichzeitiges Weitergeben einer Platzierungs-Anfrage an die zwei oder mehreren bereitwilligen Server, wobei jede Platzierungs-Anfrage einen entsprechenden bereitwilligen Server auffordert, eine Anforderung für ein Objekt von einem Klienten als eine probeweise Zulassung zu akzeptieren;
Implementieren einer Platzierungs-Verfahrensweise, um eine oder mehrere probeweise Platzierungs-Anfragen an Server zu erzeugen, so dass mindestens eine Ressource eines Servers, die einer probeweisen Platzierung zugeordnet ist, betriebsbereit ist, um für eine beschränkte Dauer reserviert zu werden und Auswählen, unter den probeweisen Zulassungen, eines Servers, um eine garantierte Zulassung zu akzeptieren und ein Bestätigungssignal zurückzusenden; wobei das Verfahren weiter umfasst:
dynamisches Steuern einer Menge von Objekt-Ressourcen an Servern im Netzwerk, wobei der dynamische Steuerungsschritt die Schritte umfasst:
Vorhersagen eines Bedarfs für eine Objekt-Ressource, einschließlich des Sammelns von Statistiken über geographische Bereiche und von Statistiken über den Bedarf;
Abschätzen der verfügbaren Kapazität, die von den Servern im Netzwerk berichtet wird, wobei die Kapazität die Fähigkeit enthält, Objekt-Ressourcen zu speichern und Objekte an einem Klienten zu streamen;
Replizieren der Objekt-Ressource, wenn der vorbestimmte Bedarf für die Objekt-Ressource die verfügbare Kapazität überschreitet und zeitweises Platzieren der Objekt-Kopie in einem Server, der im Netzwerk lokalisiert ist, wobei der Replizierungsschritt umfasst:
Verhandeln (2020) eine Replizierungs-Verbindung mit einem oder mehreren potentiellen Quell-Servern, um eine Kopie der Objekt-Ressource zur Verfügung zu stellen;
Verhandeln (2021) eine Replizierungs-Verbindung mit einem oder mehreren potentiellen Ziel-Servern, um die Kopie der Objekt-Ressource zu empfangen;
Auswählen (2055) eines Quell-Servers und eines Ziel-Servers unter den bereitwilligen Servern, die von den Verhandlungsmitteln identifiziert wurden; und
Initiieren des Replizierungs-Prozesses in dem ausgewählten Quell-Server und Ziel-Server; und
Löschen von Objekt-Kopien, die zeitweise platziert wurden, wenn der vorhergesagte Bedarf für die Objekt-Ressource abnimmt.

9. Verfahren Anspruch 8, in dem weiter die Schritte enthalten sind:
Überwachen einer Anzahl von empfangenen Anforderungen während begrenzter Zeitintervalle und
Zusammenfassung der Anforderungen in Gruppen von Anforderungen auf der Basis von einem oder mehreren vorbestimmten Kriterien.

10. Programmspeichereinrichtung, die von einer Maschine gelesen werden kann und körperlich ein Programm von Instruktionen enthält, die von einer Maschine ausgeführt werden können, um das Verfahren nach einem Ansprüche 8 und 9 durchzuführen.

## Revendications

1. Système de gestion de requêtes pour la mise en place de requêtes concernant des objets multimédia, émises par des clients indépendants, sur des serveurs répartis à travers un réseau contenant lesdits objets, chaque serveur ayant une capacité de stockage d'objets multimédia et une ressource de diffusion en flux lui permettant de délivrer aux clients les objets multimédia demandés, le système comprenant :
des moyens de commande intermédiaires (520) comprenant :
des moyens (600) pour recevoir des demandes de mise en place pour des requêtes concernant lesdits objets multimédia émises par lesdits clients, un objet demandé ayant un identifiant unique qui lui est associé ;
des moyens (665) pour localiser des copies d'un objet associées à l'identifiant d'objet donné et stockées au sein d'un ou plusieurs desdits serveurs ;
des moyens (655) pour déterminer un consentement de l'un quelconque de ces serveurs à considérer de nouvelles requêtes concernant lesdites copies d'objet, par analyse, pour chacun de ces serveurs, d'un indicateur associé à un degré de consentement de chacun desdits serveurs, ledit degré de consentement d'un serveur particulier étant rapporté par ledit serveur particulier et étant fonction de la capacité disponible dudit serveur particulier, selon son utilisation en cours telle que déterminée par la fonction gestion des ressources locales dudit serveur particulier ; et
des moyens pour générer (610) deux demandes de mise en place simultanées, ou plus, auprès de deux serveurs ou plus, en fonction du degré de consentement indiqué et d'une politique prédéterminée, lesdits moyens de commande intermédiaires transmettant lesdites deux demandes de mise en place, ou plus, auxdits deux serveurs consentants, ou plus, chacune desdites demandes de mise en place demandant à un serveur consentant d'accepter en tant qu'admission candidate une requête concernant un objet émise par un client ;
lesdits moyens de commande (520) mettant en oeuvre une politique de mise en place pour la génération de mises en place préliminaires de requêtes auprès de serveurs, de telle sorte qu'au moins une ressource d'un serveur associé à une mise en place provisoire puisse être réservée pour une durée limitée,
lesdits moyens de commande intermédiaires (520) sélectionnant, parmi les admissions candidates, un serveur qui acceptera une admission garantie et qui enverra un signal d'accusé réception ; et
les moyens de commande intermédiaires comprenant, en outre :
des moyens pour commander de manière dynamique une quantité de ressources objets disponibles dans ledit réseau, lesdits moyens de commande dynamique comprenant :
des moyens (680) pour prédire une demande concernant une ressource objet, comprenant des moyens pour le recueil de statistiques portant sur des zones géographiques et des moyens pour le recueil de statistiques portant sur la demande ;
des moyens (690) pour estimer une capacité disponible rapportée par lesdits serveurs présents dans ledit réseau pour le stockage et la diffusion en flux d'une ressource objet demandée ; et
des moyens (660) pour générer de manière dynamique une ou plusieurs copies d'objet de ladite ressource objet en fonction de ladite demande prédite pour ladite ressource objet et de ladite capacité disponible, et pour effectuer une mise en place temporaire automatique desdites copies d'objet au sein de serveurs, à travers tout ledit réseau, lorsqu'il est prédit une augmentation de la demande, et effacer les copies lorsqu'il est prédit une diminution de la demande, lesdits moyens (660) de génération dynamique comprenant :
des moyens pour négocier une connexion de duplication avec un ou plusieurs serveurs sources potentiels pour la fourniture d'une ou plusieurs copies de ladite ressource objet ;
des moyens pour négocier une connexion de duplication avec un ou plusieurs serveurs cibles potentiels pour la réception d'une ou plusieurs copies de ladite ressource objet ;
des moyens pour sélectionner un serveur source et un serveur cible parmi les serveurs consentants identifiés par les moyens de négociation ; et
des moyens pour démarrer le processus de duplication dans les serveur source et cible sélectionnés.

2. Système selon la revendication 1, dans lequel lesdits moyens (665) pour localiser des copies d'objets comprennent des premiers moyens formant services de répertoire comprenant une table de correspondance (666) entre les identifiants des objets et les positions des copies d'objets associées au sein desdits serveurs.

3. Système selon la revendication 2, dans lequel lesdits moyens (655) pour déterminer le consentement des serveurs comprennent des deuxièmes moyens formant services de répertoire comprenant une table de correspondance (656) entre les serveurs répartis disponibles et un indicateur indiquant un degré de consentement d'un serveur respectif à recevoir des demandes de mise en place.

4. Système selon la revendication 3, dans lequel ledit deuxième service de répertoire permet la mise en correspondance de serveurs répartis avec un indicateur de taux de capacité disponible (657) servant à indiquer une quantité de ressources disponible au sein dudit serveur.

5. Système selon la revendication 4, dans lequel lesdits moyens de commande sont adaptés pour accéder auxdits premier et deuxième services de répertoire pour la détermination desdites mises en place provisoires.

6. Système selon l'une quelconque des revendications précédentes, dans lequel lesdits moyens de commande (520) comprennent en outre des moyens pour surveiller un nombre de requêtes reçues pendant des intervalles de temps délimités, et pour regrouper lesdites requêtes en groupes de requêtes en fonction d'un ou plusieurs critères prédéterminés.

7. Système selon l'une quelconque des revendications précédentes, dans lequel les moyens de commande dynamique comprennent des moyens pour signaler des requêtes d'effacement (1510) pour le contenu de serveurs source (1720) et cible (1730) sélectionnés.

8. Procédé de mise en forme d'une demande concernant des objets multimédia stockés au sein d'un ou plusieurs serveurs répartis à travers un réseau, chaque dispositif serveur ayant une capacité de stockage d'objets multimédia et une ressource de diffusion en flux lui permettant de délivrer aux clients les objets multimédia demandés, le procédé comprenant les étapes de :
réception de requêtes concernant lesdits objets multimédia provenant de clients indépendants, chaque objet demandé ayant un identifiant unique qui lui est associé ;
localisation de copies d'objet associées à l'identifiant de l'objet demandé, qui sont stockées au sein d'un ou plusieurs desdits serveurs ;
détermination d'un consentement de l'un quelconque de ces serveurs à considérer une demande de mise en place associée à ladite requête concernant lesdites copies d'objet, par analyse d'un indicateur associé à un degré de consentement de chacun desdits serveurs à considérer de nouvelles requêtes, ledit degré de consentement d'un serveur particulier étant fonction de la capacité disponible dudit serveur particulier et étant rapporté par ledit serveur particulier, selon son utilisation en cours telle que déterminée par la fonction gestion des ressources locales dudit serveur particulier ;
génération de deux demandes de mise en place, ou plus, concernant ledit objet, auprès de deux serveurs consentants, ou plus, en fonction du degré de consentement indiqué et d'une politique prédéterminée, et transmission simultanée d'une demande de mise en place auxdits deux serveurs consentants, ou plus, chacune desdites demande de mise en place demandant à un serveur consentant correspondant d'accepter en tant qu'admission candidate une requête concernant un objet émise par un client ;
mise en oeuvre d'une politique de mise en place pour la génération d'une ou plusieurs mises en place préliminaires de requêtes auprès de serveurs, de telle sorte qu'au moins une ressource d'un serveur associé à une mise en place provisoire puisse être réservée pour une durée limitée, et sélection, parmi les admissions candidates, d'un serveur qui acceptera une admission garantie et qui enverra un signal d'accusé réception ; le procédé comprenant en outre une étape de :
commande dynamique d'une quantité de ressources objets disponibles au sein de serveurs dans ledit réseau, ladite étape de commande dynamique comprenant les étapes de :
prédiction d'une demande concernant une ressource objet, comprenant le recueil de statistiques portant sur des zones géographiques et de statistiques portant sur la demande ;
estimation d'une capacité disponible rapportée par lesdits serveurs présents dans ledit réseau, ladite capacité comprenant l'aptitude à stocker des ressources objets et à diffuser des objets en flux à un client ;
duplication de ladite ressource objet lorsque ladite demande prédite pour ladite ressource objet excède ladite capacité disponible, et mise en place temporaire de ladite copie d'objet au sein d'un serveur situé dans ledit réseau, ladite étape de duplication comprenant les étapes de:
négociation (2020) d'une connexion de duplication avec un ou plusieurs serveurs sources potentiels pour la fourniture d'une copie de ladite ressource objet ;
négociation (2021) d'une connexion de duplication avec un ou plusieurs serveurs cibles potentiels pour la réception de ladite copie de ladite ressource objet ;
sélection (2055) d'un serveur source et d'un serveur cible parmi les serveurs consentants identifiés par les moyens de négociation ; et
démarrage du processus de duplication dans les serveurs source et cible sélectionnés ; et
effacement des copies d'objets qui ont été temporairement mises en place lorsque la demande prédite pour ladite ressource objet diminue.

9. Procédé selon la revendication 8, comprenant en outre les étapes de :
surveillance d'un nombre de requêtes reçues pendant des intervalles de temps délimités, et
regroupement desdites requêtes en groupes de requêtes en fonction d'un ou plusieurs critères prédéterminés.

10. Dispositif de stockage de programme lisible par une machine, mettant en application de façon tangible un programme d'instructions pouvant être exécuté par la machine pour la mise en oeuvre d'étapes d'un procédé selon l'une quelconque des revendications 8 et 9.
